(19) Europäisches Patentamt
European Patent Office
Office européen des brevets

(11) EP 1 958 980 B1

# (12) EUROPEAN PATENT SPECIFICATION

(45) Date of publication and mention of the grant of the patent:
**31.10.2012 Bulletin 2012/44**

(21) Application number: **06833842.5**

(22) Date of filing: **24.11.2006**

(51) Int Cl.:
***C08J 3/24*** (2006.01) ***C08J 9/06*** (2006.01)
***C08L 101/00*** (2006.01) ***C08L 21/00*** (2006.01)

(86) International application number:
**PCT/JP2006/324039**

(87) International publication number:
**WO 2007/066584 (14.06.2007 Gazette 2007/24)**

## (54) THERMOPLASTIC ELASTOMER COMPOSITION, FOAM PRODUCT, AND PROCESS FOR PRODUCTION OF THE COMPOSITION OR FOAM PRODUCT

THERMOPLASTISCHE ELASTOMERZUSAMMENSETZUNG, SCHAUMSTOFFPRODUKT UND VERFAHREN ZUR HERSTELLUNG DER ZUSAMMENSETZUNG ODER DES SCHAUMSTOFFPRODUKTS

COMPOSITION D' ELASTOMERE THERMOPLASTIQUE, MOUSSE ET PROCEDE DE PRODUCTION DE CELLES-CI

(84) Designated Contracting States:
**DE FI FR GB**

(30) Priority: **05.12.2005 JP 2005350269**
**23.03.2006 JP 2006081292**

(43) Date of publication of application:
**20.08.2008 Bulletin 2008/34**

(73) Proprietor: **JSR Corporation**
**Tokyo 104-8410 (JP)**

(72) Inventors:
- **YAMAMOTO, Norihiro**
  **Tokyo 104-8410 (JP)**
- **KANAE, Kentarou**
  **Tokyo 104-8410 (JP)**
- **MAEDA, Minoru**
  **Tokyo 104-8410 (JP)**

(74) Representative: **TBK**
**Bavariaring 4-6**
**80336 München (DE)**

(56) References cited:
**WO-A1-03/018677**
**WO-A1-2006/080491**
**JP-A- 09 143 297**
**JP-A- 09 296 063**
**JP-A- 54 120 669**
**JP-A- 2001 187 830**
**JP-A- 2001 348 452**
**JP-A- 2002 146 075**
**JP-A- 2002 146 131**
**JP-A- 2004 149 553**
**JP-A- 2004 223 753**
**JP-A- 2004 250 529**
**US-A1- 2004 249 009**

- **DATABASE WPI Week 200373 Thomson Scientific, London, GB; AN 2003-772911weaht XP002592271 & JP 2003 268148 A (JSR CORP) 25 September 2003 (2003-09-25)**
- **DATABASE WPI Week 200517 Thomson Scientific, London, GB; AN 2005-156308 XP002592272 & JP 2005 036143 A (RIKEN VINYL KOGYO KK) 10 February 2005 (2005-02-10)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 958 980 B1

## Description

### TECHNICAL FIELD

The present invention relates to a thermoplastic elastomer composition, a foam product, and a process for production of the composition and the foam product. More particularly, the present invention relates to a thermoplastic elastomer composition capable of producing a foam product having a high frequency of closed cell formation, high uniformity in the shape of foam cells and excellent rubber elasticity, a foam product with a high frequency of closed cell formation, high uniformity in the shape of foam cells and excellent rubber elasticity, and a process for producing the thermoplastic elastomer composition and the foam product.

### BACKGROUND ART

In recent years, foam-molded products are being used in many product fields as a shock absorbing material for absorbing vibrations and noise, as parts imparting a soft feeling of touch for interior parts of vehicles, exterior parts, home electronics, information machines and equipment, and the like. A thermoplastic elastomer composition has attracted attention as a raw material not only easy to mold, but also easy to foam. As an example of such a thermoplastic elastomer composition, a dynamically cross-linkable thermoplastic elastomer composition can be given (see Patent Document 1, for example). Production of a foam product using the thermoplastic elastomer composition has been known.
However, it is difficult to uniformly foam a crosslinkable rubber component included in such a dynamically cross-linkable thermoplastic elastomer composition. Only crystalline polyolefin foams uniformly to produce a foam-molded product which is not uniform as a whole. In addition, since foaming gas escapes from the surface of the molded product, only a low foam expansion rate is achieved, resulting in a product with a surface lacking smoothness and fine external appearance. A non-crosslinkable thermoplastic elastomer composition has a problem of producing a large compression set due to absence of a crosslinking structure in the foam product.
On the other hand, a composition for polyolefin resin foam molding having a melt tension of a specified value is disclosed (see Patent Document 2, for example). A foam product with excellent pliability and cushioning properties can be obtained using this composition for polyolefin resin foam molding. However, such a composition for polyolefin resin foam molding has still room for improvement in pliability and molding processability. Development of a material composition which can produce a foam product with a high frequency of closed cell formation, high uniformity in the shape of foam cells, excellent rubber elasticity, and excellent pliability has been desired.
Patent Document 1: JP-A-6-73222
Patent Document 2: JP-A-2004-250529

Further, US 2004/0249009 A1 discloses an olefin-base thermoplastic elastomer foam and an olefin-base thermoplastic elastomer composition for the foam.

### DISCLOSURE OF THE INVENTION

The present invention has been achieved in view of these problems in general technologies and has an object of providing a thermoplastic elastomer composition excelling in pliability, moldability, and surface appearance which can produce a foam product with a high frequency of closed cell formation, high uniformity in the shape of foam cells, and excellent rubber elasticity, excellent pliability, and a superior external appearance at a high foam expansion rate; a foam product with high independent foamability, a uniform bubble form, and excellent rubber elasticity; a foam product with a high frequency of closed cell formation, high uniformity in the shape of foam cells, and excellent rubber elasticity, excellent pliability, and a superior external appearance; and a process for producing the thermoplastic elastomer composition and the foam product.
As a result of extensive studies in order to achieve the above object, the inventors of the present invention have found that this object can be achieved by a composition comprising an elastomer and a thermoplastic resin and/or a thermoplastic resin composition having a comparatively high melt tension and a comparatively small compression set.
Specifically, the following thermoplastic elastomer compositions, foam products, and process for producing the foam products are provided according to the present invention.
[1]A thermoplastic elastomer composition obtained by dynamically treating a mixture of (A) a rubber and (B) a thermoplastic resin (B-1) and/or a thermoplastic resin composition (B-2) with heat in the presence of (C) a crosslinking

agent, the thermoplastic elastomer composition having a melt tension of 5.0 cN or more at 210°C at a pulling rate of 2.0 m/min and a compression set of 80% or less when measured according to JIS K6262 at 70°C and 22 hours, wherein the rubber (A) is at least one rubber selected from a group consisting of butadiene rubber, styrene-butadiene rubber, ethylene-α-olefin copolymer rubber, butyl rubber, isoprene rubber, acrylonitrile rubber, and chloroprene rubber, and
wherein the thermoplastic resin (B-1) is an olefin resin and the thermoplastic resin composition (B-2) is an olefin resin composition.

[2] The thermoplastic elastomer composition according to [1], wherein the thermoplastic resin (B-1) has a melt tension of 3.0 cN or more at 210°C at a pulling rate of 2.0 m/min, and the thermoplastic resin composition (B-2) has a melt tension of 3.0 cN or more at 210°C at a pulling rate of 2.0 m/min.

[3] The thermoplastic elastomer composition according to any one of [1] to [2], wherein the thermoplastic resin composition (B-2) has a melt tension of 3.0 cN or more at 210°C at a pulling rate of 2.0 m/min and a compression set of 60% or less when measured according to JIS K6262 at 70°C and 22 hours.

[4] The thermoplastic elastomer composition according to any one of [1] to [3] wherein the thermoplastic resin (B-1) is a crystalline α-olefin thermoplastic resin and/or an amorphous α-olefin thermoplastic resin composition.

[5] The thermoplastic elastomer composition according to any one of [1] to [4], wherein the thermoplastic resin composition (B-2) comprises a crystalline α-olefin thermoplastic resin and/or an amorphous α-olefin thermoplastic resin composition and a hydrogenated diene polymer.

[6] A process for producing a thermoplastic elastomer composition comprising providing a mixture of (A) a rubber and (B-1-b) a crystalline α-olefin thermoplastic resin and/or an amorphous α-olefin thermoplastic resin having a melt tension of less than 3.0 cN at 210°C at a pulling rate of 2.0 m/min, dynamically treating the mixture with heat in the presence of (C) a crosslinking agent, and adding (B-1-a) a thermoplastic resin having a melt tension of 3.0 cN or more at 210°C at a pulling rate of 2.0 m/min and/or (B-2-a) a thermoplastic resin composition having a melt tension of 3.0 cN or more at 210°C at a pulling rate of 2.0 m/min, wherein the rubber (A) is at least one rubber selected from the group consisting of butadiene rubber, styrene, butadiene rubber, ethylene-α-olefine copolymer rubber, butyl rubber, isoprene rubber, acrylonitrile rubber and chloroprene rubber.

[7] A foam product obtained by foaming the thermoplastic elastomer composition according to any one of [1] to [5].

[8] A process for producing a foam product comprising injecting an inert gas into the thermoplastic elastomer composition according to any one of [1] to [5] in a melted state, and foaming the thermoplastic elastomer composition (hereinafter referred to from time to time as "a first production process of foam product").

[9] A process for producing a foam product comprising obtaining a chemical foaming agent -containing raw material by compounding a chemical foaming in an amount agent of 0.01 to 20 parts by mass to100 parts by mass of the thermoplastic elastomer composition according to any one of [1] to [5], and foaming the resulting chemical-foaming-agent-containing raw material (hereinafter referred to from time to time as "a second production process of foam

product").

The thermoplastic elastomer composition of the present invention has a high foam expansion rate and can produce a foam product with a high frequency of closed cell formation, high uniformity in the shape of foam cells, and excellent rubber elasticity, excellent pliability, and superior external appearance as well. The thermoplastic elastomer composition of the present invention has excellent pliability and molding processability.

The foam product of the present invention has a high foam expansion rate, high frequency of closed cell formation, high uniformity in the shape of foam cells, excellent rubber elasticity, excellent pliability, and superior external appearance.

According to the first production process of a foam product of the present invention, a foam product with a high frequency of closed cell formation, high uniformity in the shape of foam cells, excellent rubber elasticity, excellent pliability, and superior external appearance can be produced at a high foam expansion rate. According to the second production process of a foam product of the present invention, a foam product with a high frequency of closed cell formation, high uniformity in the shape of foam cells, excellent rubber elasticity, excellent pliability, and superior external appearance can be produced at a high foam expansion rate.

BRIEF DESCRIPTION OF THE DRAWINGS

Figure 1 is an electron microscope photograph showing the microstructure of a foam product of Example 7.

BEST MODE FOR CARRYING OUT THE INVENTION

Preferred embodiments of the present invention are described below. Note that the present invention is not limited to the following embodiments. Various modifications and improvements may be made to the embodiments without departing from the scope of the present invention based on the knowledge of a person skilled in the art. The term "production process of a foam product" in the following description refers to both the first production process of a foam product and the second production process of a foam product.

1. Thermoplastic elastomer composition

A first embodiment of the thermoplastic elastomer composition of the present invention is a thermoplastic elastomer composition obtained by dynamically treating a mixture of (A) a rubber (hereinafter referred to from time to time as "Component (A)") and (B) a thermoplastic resin (B-1) and/or a thermoplastic resin composition (B-2) (hereinafter referred to from time to time as "Component B") with heat in the presence of (C) a crosslinking agent, and having a melt tension of 5.0 cN or more at 210°C at a pulling rate of 2.0 m/min (hereinafter simply referred to from time to time as "melt tension") and a compression set of 80% or less when measured according to JIS K6262 at 70°C and 22 hours. Details are described below.

((A) Rubber)

The component (A) contained in the thermoplastic elastomer composition of the embodiment is at least one rubber selected from the group consisting of a butadiene rubber (BR), an isoprene rubber (IR), styrene-butadiene rubber (SBR), an ethylene-$\alpha$-olefin copolymer rubber, a butyl rubber (IIR), an acrylonitrile rubber (NBR), and a chloroprene rubber (CR). These rubbers may be used either individually or in combination of two or more. Among these, conjugated diene rubbers and ethylene-$\alpha$-olefin copolymer rubbers are preferable.

(Conjugated diene rubber)

The conjugated diene rubbers are preferably obtained by polymerizing a conjugated diene compound such as 1,3-butadiene, 2-methyl-1,3-butadiene (isoprene), 2,3-dimethyl-1,3-butadiene. A conjugated diene rubber obtained by polymerization in the presence of a catalyst containing the following components (a) to (d) as main components is particularly preferable. As the conjugated diene compound, 1,3-butadiene and isoprene are preferable. In addition, a conjugated diene rubber having a cis-1,4-bond content of 90 mass% or more and a ratio (Mw/Mn) of the weight average molecular weight (Mw) and the number average molecular weight (Mn) measured by gel permeation chromatography of 3.5 or less is preferable.

Component (a): a rare earth element-containing compound which comprises a rare earth element of an atomic number of 57 to 71 in the periodic table, or a reaction product of the rare earth element with a Lewis base (hereinafter referred to from time to time as "rare earth element-containing compound (a)").

Component (b): alumoxane
Component (c): an organoaluminum compound shown by the formula $AlR^1R^2 R^3$, wherein $R^1$ and $R^2$ individually represent a hydrocarbon group having 1 to 10 carbon atoms or a hydrogen atom, and $R^3$ represents a hydrocarbon group having 1 to 10 carbon atoms which may be the same or different from $R^1$ and $R^2$
Component (d): a halogenated silicon compound and/or a halogenated organosilicon compound (hereinafter referred to as "silicon compound (d)")

((a) Rare earth compound)

The component (a) is a rare earth element-containing compound which comprises a rare earth element of an atomic number of 57 to 71 in the periodic table, or a reaction product of the rare earth element with a Lewis base. Neodymium, praseodymium, cerium, lanthanum, and gadolinium are the preferable rare earth elements, with neodymium being more preferable. Two or more rare earth elements may be used in combination. The rare earth element-containing compound is preferably a carboxylate, an alkoxide, a β-diketone complex, a phosphate, or a phosphite. Among these, a carboxylate and a phosphate are more preferable, with carboxylate being particularly preferable.
The carboxylate of a rare earth element is, for example, represented by the formula $(R^{23}\text{-}CO_2)_3M$, wherein M is a rare earth element of the atomic number from 57 to 71 of the periodic table, and $R^{23}$ is a hydrocarbon group having 1 to 20 carbon atoms; the hydrocarbon group is preferably a saturated or unsaturated linear, branched, or cyclic hydrocarbon group; and the carboxylic group bonds to a primary, secondary, or tertiary carbon atom. As specific examples, salts of octanoic acid, 2-ethylhexanoic acid, oleic acid, stearic acid, benzoic acid, naphthenic acid, "Versatic acid" (a carboxylic acid having a carboxyl group bonded to a tertiary carbon atom, manufactured by Shell Chemical Co., Ltd.), and the like can be given. Among these, a salt of 2-ethylhexanoic acid, a salt of naphthenic acid, and a salt of Versatic acid are preferable.
The alkoxide of a rare earth element is, for example, represented by the formula $(R^{24}O)_3M$, wherein M is a rare earth element of the atomic number from 57 to 71 of the periodic table, and $R^{24}$ is a hydrocarbon group having 1 to 20 carbon atoms; the hydrocarbon group is preferably a saturated or unsaturated linear, branched, or cyclic hydrocarbon group; and the alkoxy group bonds to a primary, secondary, or tertiary carbon atom. As specific examples of the alkoxy group represented by $R^{24}O$, a 2-ethylhexylalkoxy group, an oleylalkoxy group, a stearylalkoxy group, a phenoxy group, a benzylalkoxy group, and the like can be mentioned. Among these, a 2-ethylhexylalkoxy group and a benzylalkoxy group are preferable.
As specific examples of the β-diketone complex of the rare earth element, complexes of acetylacetone, benzoylacetone, propionyl acetone, valeryl acetone, ethyl acetylacetone, or the like can be mentioned. Among these, an acetylacetone complex and an ethyl acetylacetone complex are preferable.
Examples of the phosphate or phosphite of a rare earth element include rare earth element salts of bis(2-ethylhexyl)phosphate, bis(1-methylheptyl)phosphate, bis(p-nonylphenyl)phosphate, bis(polyethylene glycol p-nonylphenyl)phosphate, (1-methylheptyl)(2-ethylhexyl)phosphate, (2-ethylhexyl)(p-nonylphenyl)phosphate, mono-2-ethylhexyl 2-ethylhexylphosphonate, mono-p-nonylphenyl 2-ethylhexylphosphonate, bis(2-ethylhexyl)phosphinate, bis(1-methylheptyl)phosphinate, bis(p-nonylphenyl)phosphinate, (1-methylheptyl)(2-ethylhexyl)phosphinate, and (2-ethylhexyl)(p-nonylphenyl)phosphinate. Among these, salts of bis(2-ethylhexyl)phosphate, bis(1-methylheptyl)phosphate, mono-2-ethylhexyl-2-ethylhexylphosphate, and bis(2-ethylhexyl) phosphinate are preferable. Among the rare earth element-containing compounds described above, a neodymium salt of phosphoric acid or a neodymium salt of carboxylic acid are particularly preferable, with a neodyum salt of carboxylic acid such as neodymium 2-ethylhexanoate, neodymium salt of Versatic acid, and the like being most preferable.
The Lewis base which is used to easily solubilize the rare earth element-containing compound in a solvent is used in an amount preferably of 0 to 30 mol, and more preferably 0 to 10 mol, per one mol of the rare earth element-containing compound. The Lewis base may be used as a mixture with the rare earth element-containing compound. As examples of the Lewis base, acetylacetone, tetrahydrofuran, pyridine, N,N-dimethylformamide, thiophene, diphenyl ether, triethylamine, an organic phosphorous compound, a monohydric or dihydric alcohol, and the like can be given. The component (a) mentioned above can be used individually or in combination of two or more.

((b) Alumoxane)

The component (b) is a compound having the structure shown by the following formula (1) or (2). The alumoxane may be alumoxane association products disclosed in Fine Chemicals, 23 (9), 5 (1994), J. Am. Chem. Soc., 115, 4971 (1993), and J. Am. Chem. Soc., 117, 6465 (1995).
[Formula 1]

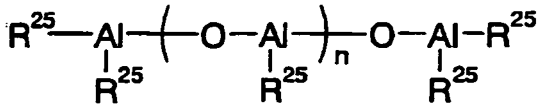

(1)

[Formula 2]

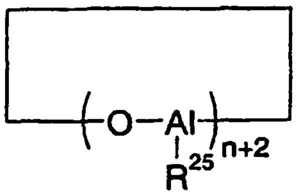

(2)

In the formulas (1) and (2), $R^{25}$ is a hydrocarbon group having 1 to 20 carbon atoms and n is an integer of 2 or more. As examples of $R^{25}$ in the formulas (1) and (2), methyl, ethyl, propyl, butyl, isobutyl, t-butyl, hexyl, iso-hexyl, octyl, and iso-octyl groups can be given. Among these, methyl, ethyl, isobutyl, and t-butyl groups are preferable, with the methyl group being more preferable. In the formulas, n is 2 or more, preferably an integer of 4 to 100. As specific examples of the component (b), methylalumoxane, ethylalumoxane, n-propylalumoxane, n-butylalumoxane, isobutylalumoxane, t-butylalumoxane, hexylalumoxane, and iso-exylalumoxane can be given.

The component (b) may be a compound produced by any commonly-known technology. For example, it may be produced by adding a trialkyl aluminum or a dialkyl aluminum monochloride to an organic solvent such as benzene, toluene, and xylene, further adding thereto water, steam, steam-containing nitrogen gas, or a salt having crystal water such as copper sulfate pentahydrate or aluminium sulfate hexadecahydrate, and reacting the mixture. The component (b) mentioned above can be used individually or in combination of two or more.

((c) Organoaluminum compound)

As examples of the component (c), trimethylaluminum, triethylaluminum, tri-n-propylaluminum, triisopropylaluminum, tri-n-butylaluminum, triisobutylaluminum, tri-t-butylaluminum, tripentylaluminum, trihexylaluminum, tricyclohexylaluminum, trioctylaluminum, hydrogenated diethylaluminum, hydrogenated di-n-propylaluminum, hydrogenated di-n-butylaluminum, hydrogenated diisobutylaluminum, hydrogenated dihexylaluminum, hydrogenated diisohexylaluminum, hydrogenated dioctylaluminum, hydrogenated diisooctylaluminum, ethylaluminum dihydride, n-propylaluminum dihydride, and isobutylaluminum dihydride can be given. Among these, triethylaluminum, triisobutylaluminum, hydrogenated diethylaluminum, and hydrogenated diisobutylaluminum are preferable. The component (c) mentioned above can be used individually or in combination of two or more.

((d) Silicon compound)

The component (d) is a halogenated silicon compound and/or a halogenated organosilicon compound. As the halogenated silicon compound, silicon tetrachloride, silicon tetrabromide, silicon tetraiodide, hexachlorodisilane, and the like can be given.

As examples of the halogenated organosilicon compound, triphenylchlorosilane, trihexylchlorosilane, trioctylchlorosilane, tributylchlorosilane, triethylchlorosilane, trimethylchlorosilane, methylchlorosilane, trimethylbromosilane, diphenyldichlorosilane, dihexyldichlorosilane, dioctyldichlorosilane, dibutyldichlorosilane, diethyldichlorosilane, dimethyldichlorosilane, methyldichlorosilane, phenyltrichlorosilane, hexyltrichlorosilane, octyltrichlorosilane, butyltrichlorosilane, methyltrichlorosilane, ethyltrichlorosilane, vinyltrichlorosilane, trichlorosilane, tribromosilane, vinylmethyldichlorosilane, vinyldimethylchlorosilane, chloromethylsilane, chloromethyltrimethylsilane, chloromethyldimethylchlorosilane, chloromethylmethyldichlorosilane, chloromethyltrichlorosilane, dichloromethylsilane, dichloromethylmethyldichlorosilane, dichloromethyldimethylchlorosilane, dichlorotetramethyldisilane, tetrachlorodimethylsilane, bischlorodimethylsilylethane, dichlorotetramethyldisiloxane, trimethylsiloxydichlorosilane, trimethylsiloxydimethylchlorosilane, and tristrimethylsiloxidichlorosilane can be given.

As the component (d), silicon tetrachloride, triethylchlorosilane, trimethylchlorosilane, diethyldichlorosilane, dimethyldichlorosilane, methyldichlorosilane, ethyltrichlorosilane, methyltrichlorosilane, trichlorosilane, dichlorotetramethyldisilane, and dichlorotetramethyldisiloxane are preferable, with silicon tetrachloride being more preferable. The component (d) mentioned above can be used individually or in combination of two or more.

The component (a) is used in an amount preferably of 0.0001 to 1.0 mmol, and more preferably 0.0005 to 0.5

mmol per 100 g of the conjugated diene compound. If less than 0.0001 mmol, the polymerization activity tends to decrease. On the other hand, the addition of the component (a) in an amount of more than 1.0 mmol results in a high catalyst concentration. A deashing step is necessary in some cases.

The amount of the component (b) used can be shown by the mol ratio of Al to the component (a). That is, the molar ratio of the component (a) to the component (b) is preferably 1:1 to 1:500, more preferably 1:3 to 1:250, and particularly preferably 1:5 to 1:100. The molar ratio of the component (a) to the component (c) is preferably 1:1 to 1:300, and more preferably 1:3 to 1:150. The molar ratio of the component (a) to the component (d) is preferably 1:0.1 to 1:30, and more preferably 1:0.2 to 1:15.

If the amount of the catalyst and the ratio of the catalyst components are outside of the above range, the catalytic activity tends to decrease or a step of removing the catalyst residue may be necessary. In addition to the components (a) to (d), the polymerization reaction may be carried out in the presence of hydrogen gas in order to adjust the molecular weight of the resulting conjugated diene polymer.

In addition to the components (a) to (d), the catalyst may optionally contain a conjugated diene compound and/or a non-conjugated diene compound in an amount of 0 to 50 mol per one mol of the component (a). The same monomers as the monomers used for the polymerization such as 1,3-butadiene and isoprene can be given as the conjugated diene compound. As examples of the non-conjugated diene compound, divinylbenzene, diisopropenylbenzene, triisopropenylbenzene, 1,4-vinylhexadiene, and ethylidenenorbornene can be given. Although it is not essential to use a conjugation diene compound or a non-conjugated diene compound as a catalyst component, their use has an advantage of further promoting the catalyst activity.

The catalyst may be produced by reacting the components (a) to (d) dissolved in a solvent and optionally the conjugated diene compounds and/or non-conjugated diene compounds. The order of addition of each component is arbitrary. However, it is preferable to previously mix and react the components and age the reaction product in order to increase the catalyst activity and to reduce the polymerization initiation induction period. The aging temperature is preferably 0 to 100°C, and more preferably 20 to 80°C. If lower than 0°C, the aging tends to be insufficient. If higher than 100°C, on the other hand, the catalytic activity tends to decrease and the molecular weight distribution tends to broaden. There are no specific limitations to the period of time for aging. It is possible to contact the catalyst components before adding to the polymerization reaction vessel in a feed line. An aging time of 0.5 minutes or longer is sufficient to stably preserve the catalyst for several days.

As examples of the conjugated diene compound polymerized using the catalyst containing the components (a) to (d) as major components, 1,3-butadiene, 2-methyl-1,3-butadiene (isoprene), 2,3-dimethyl-1,3-butadiene, 1,3-pentadiene, 1,3-hexadiene, and myrcene can be given. Among these, 1,3-butadiene, isoprene, and 1,3-pentadiene are preferable, with 1,3-butadiene being more preferable. These conjugated diene compounds may be used individually or in combination of two or more.

The conjugated diene rubber can be produced by a polymerization reaction in the presence or absence of a solvent. An inert organic solvent can be used as the polymerization solvent. As examples of the organic solvent, saturated aliphatic hydrocarbons having 1 to 4 carbon atoms such as butane, pentane, hexane, and heptane; saturated alicyclic hydrocarbons having 6 to 20 carbon atoms such as cyclopentane and cyclohexane; monoolefins such as 1-butene and 2-butene; aromatic hydrocarbons such as benzene, toluene, and xylene; and halogenated hydrocarbons such as methylene chloride, chloroform, carbon tetrachloride, trichloroethylene, perchloroethylene, 1,2-dichloroethane, chlorobenzene, bromobenzene, and chlorotoluene can be given.

The polymerization temperature is usually from -30°C to +200°C, and preferably from 0°C to +150°C. The polymerization reaction may be either a batch reaction or a continuous reaction. When the polymerization solvent is used, the monomer concentration in the solution is usually 5 to 50 mass%, and preferably 7 to 35 mass%. It is preferable to prevent the polymerization system from being contaminated by deactivating substances such as oxygen, water, or carbon dioxide or other chemical compounds in order to prevent deactivation of the catalyst composition and the polymer.

A conjugated diene rubber having a high 1,4-cis-bond content and a sharp molecular weight distribution can be produced by using the catalyst containing the components (a) to (d) as major components. The 1,4-cis-bond content of the conjugated diene polymer produced by using the catalyst containing the components (a) to (d) as major components is usually 90% or more, and preferably 92% or more. The 1,2-vinyl content of the conjugated diene polymer is usually 2.5% or less, and preferably 2.0% or less. Mechanical properties and rubber elasticity tend to decrease outside of these ranges. The microstructures such as the 1,4-cis-bond content and the like of the conjugated diene rubber can be easily adjusted by controlling the catalyst composition ratio and the polymerization temperature.

The ratio (Mw/Mn) of the weight average molecular weight (Mw) to the number average molecular weight (Mn) of the conjugated diene polymer is 3.5 or less, preferably 3.3 or less. If more than 3.5, the rubber elasticity tends to decrease. The Mw/Mn ratio can be easily adjusted by controlling the molar ratio of the components (a) to (d). Mooney viscosity ($ML_{1+4}$ (100°C)) of the conjugated diene rubber is preferably 10 to 100, and more preferably 15 to 90. If less than 10, the mechanical properties and rubber elasticity of the thermoplastic elastomer composition tend to decrease. If more than 100, processability during dynamic crosslinking tends to decrease.

The molecular weight of the conjugated diene rubber can be controlled in a wide range. The polystyrene-reduced weight average molecular weight (Mw) determined by GPC of the conjugation diene rubber is usually 50,000 to 1,500,000, and preferably 100,000 to 1,000,000. If less than 50,000, the mechanical properties and rubber elasticity of the thermoplastic elastomer composition tend to decrease. If more than 1,500,000, processability during dynamic crosslinking tends to decrease.

A polymerization terminator and a polymer stabilizer may be optionally added to the reaction system. The target conjugated diene rubber can be collected from the reaction product by a drying operation, while removing the solvent using a desolvent agent known to be usable in the production of a conjugated diene polymer.

It is preferable to polymerize the conjugated diene compound using the above catalyst and continuously react at least one compound selected from a group consisting of the following components (e) to (k) with active terminals of the resulting polymer (this reaction is hereinafter referred to from time to time as "modification"). A polymer with a large molecular weight or a polymer with branched molecular chains can be obtained in this manner. The modification can improve the mechanical properties and rubber elasticity.

Component (e): A halogenated organometallic compound, a halogenated metallic compound, or an organometallic compound having a formula $R^4{}_nM'X_{4-n}$, $M'X_4$, $M'X_3$, $R^4{}_nM'(-R^5\text{-}COOR^6)_{4-n}$, or $R^4{}_nM'(-R^5\text{-}COR^6)_{4-n}$ (wherein $R^4$ and $R^5$ are the same or different hydrocarbon groups having 1 to 20 carbon atoms, $R^6$ is a hydrocarbon group having 1 to 20 carbon atoms which may contain a carbonyl group or an ester group on the side chain, M' is a tin atom, a silicon atom, a germanium atom, or a phosphorus atom, X is a halogen atom, and n is an integer of 0 to 3).

Component (f): A heterocumulene compound which contains a Y=C=Z bond in the molecule (Y is a carbon atom, an oxygen atom, a nitrogen atom, or a sulfur atom, and Z is an oxygen atom, a nitrogen atom, or a sulfur atom).

Component (g): A hetero three-member-ring compound which contains the bond shown by the following formula (3),

[Formula 3]

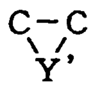

(3)

wherein Y' is an oxygen atom, a nitrogen atom, or a sulfur atom.

Component (h): Halogenated isocyano compound

Component (i): A carboxylic acid, an acid halide, an ester compound, a carbonate compound, or an acid anhydride of the formula $R^7\text{-}(COOH)_m$, $R^8(COX)_m$, $R^9\text{-}(COO\text{-}R^{10})$, $R^{11}\text{-}OCOO\text{-}R^{12}$, or $R^{13}\text{-}(COOCO\text{-}R^{14})_m$ (wherein $R^7$ to $R^{15}$ are the same or different hydrocarbon groups having 1 to 50 carbon atoms, X represents a halogen atom, and m is an integer of 1 to 5).

[Formula 4]

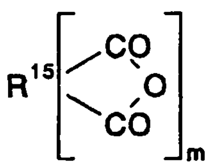

(4)

Component (j): A metal salt of carboxylic acid of the formulas $R^{16}{}_1M''(OCOR^{17})_{4-1}$, $R^{18}{}_1M''(OCO\text{-}R^{19}\text{-}COOR^{20})_{4-1}$, or the general formula (5) (wherein $R^{16}$ to $R^{22}$ are the same or different hydrocarbon groups having 1 to 20 carbon atoms, M" represents a tin atom, a silicon atom, or a germanium atom, and 1 is an integer of 0 to 3).

[Formula 5]

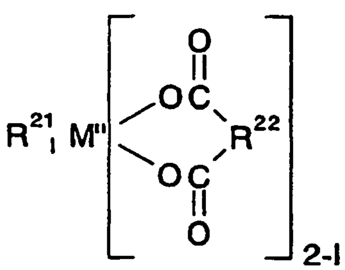

(5)

Component (k): compound having an alkoxysilyl group

Among examples of the component (e), as specific examples of the compounds in which M' is a tin atom, triphenyltin chloride, tributyltin chloride, triisopropyltin chloride, trihexyltin chloride, trioctyltin chloride, diphenyltin dichloride, dibutyltin dichloride, dihexyltin dichloride, dioctyltin dichloride, phenyltin trichloride, butyltin trichloride, octyltin trichloride, and tin tetrachloride can be given.

Among examples of the component (e), as specific examples of the compounds in which M' is a silicon atom, triphenylchlorosilane, trihexylchlorosilane, trioctylchlorosilane, tributylchlorosilane, trimethylchlorosilane, diphenyldichlorosilane, dihexyldichlorosilane, dioctyldichlorosilane, dibutyldichlorosilane, dimethyldichlorosilane, methyldichlorosilane, phenylchlorosilane, hexyltridichlorosilane, octyltrichlorosilane, butyltrichlorosilane, methyltrichlorosilane, and silicon tetrachloride can be given.

Among examples of the component (e), as specific examples of the compounds in which M' is a germanium atom, triphenylgermanium chloride, dibutylgermanium dichloride, diphenylgermanium dichloride, butylgermanium trichloride, and germanium tetrachloride can be given. Among examples of the component (e), as examples of the compound in which M' is a phosphorus atom, phosphorus trichloride and the like can be given. These compounds of component (e) may be used in combination in an arbitrary proportion.

Among examples of the component (f), the compound in which Y is a carbon atom and Z is an oxygen atom is a ketene compound, and the compound in which Y is a carbon atom and Z is a sulfur atom is a thioketene compound. The compound in which Y is a nitrogen atom and Z is an oxygen atom is an isocyanate compound, and the compound in which Y is a nitrogen atom and Z is a sulfur atom is a thioisocyanate compound. The compound in which both Y and Z are nitrogen atoms is a carbodiimide compound, the compound in which both Y and Z are oxygen atoms is carbon dioxide, the compound in which Y is an oxygen atom and Z is a sulfur atom is carbonyl sulfide, and the compound in which both Y and Z are sulfur atoms is carbon disulfide. The component (f) is not limited to these compounds.

As examples of the ketene compound, ethyl ketene, butyl ketene, phenyl ketene, and tolyl ketene can be given. As examples of the thioketene compound, ethylene thioketene, butyl thioketene, phenyl thioketene, and tolyl thioketene can be given. As examples of the isocyanate compound, phenylisocyanate, 2,4-tolylenediisocyanate, 2,6-tolylenediisocyanate, diphenylmethanediisocyanate, polymeric-type diphenylmethanediisocyanate, and hexamethylenediisocyanate can be given. As examples of the thioisocyanate compound, phenylthioisocyanate, 2,4-trilenedithioisocyanate, and hexamethylenedithioisocyanate can be given. As examples of the carbodiimide compound, N,N'-diphenylcarbodiimide and N,N'-ethylcarbodiimide can be given.

Among examples of the component (g), the compound in which Y' is an oxygen atom is an epoxy compound, the compound in which Y' is a nitrogen atom is an ethyleneimine derivative, and the compound in which Y' is a sulfur atom is a thiirane compound. As examples of the epoxy compound, ethylene oxide, propylene oxide, cyclohexene oxide, styrene oxide, epoxidated soybean oil, and epoxidated natural rubber can be given. As examples of the ethyleneimine derivative, ethyleneimine, propyleneimine, N-phenylethyleneimine, and N-(β-cyanoethyl)ethyleneimine can be given. As examples of the thiirane compound, thiirane, methylthiirane, and phenylthiirane can be given.

The halogenated isocyano compound of the component (h) is a compound having a structure shown by the following formula (6),

[Formula 6]

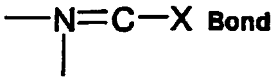


(6)

wherein X is a halogen atom.

As examples of the halogenated isocyano compound, 2-amino-6-chloropyridine, 2,5-dibromopyridine, 4-chloro-2-phenylquinazoline, 2,4,5-tribromoimidazole, 3,6-dichloro-4-methylpyridazine, 3,4,5-trichloropyridazine, 4-amino-6-chloro-2-mercaptopyrimidine, 2-amino 4-chloro-6-methylpyrimidine, 2-amino-4,6-dichloropyrimidine, 6-chloro-2,4-dimethoxypyrimidine, 2-chloropyrimidine, 2,4-dichloro-6-methylpyrimidine, 4,6-dichloro-2-(methylthio)pyrimidine, 2,4,5,6-tetrachloropyrimidine, 2,4,6-trichloropyrimidine, 2-amino-6-chloropyrazine, 2,6-dichloropyrazine, 2,4-bis(methylthio)-6-chloro-1,3,5-triazine, 2,4,6-trichloro-1,3,5-triazine, 2-bromo-5-nitrothiazole, 2-chlorobenzothiazole, 2-chlorobenzooxazole can be given.

Among examples of the component (i), as examples of the carboxylic acid, acetic acid, stearic acid, adipic acid, maleic acid, benzoic acid, acrylic acid, metacrylic acid, phthalic acid, isophthalic acid, terephthalic acid, trimellitic acid, pyromellitic acid, mellitic acid, a hydrolyzate or partial hydrolyzate of a polymethacrylate or polyacrylic acid compound, and the like can be given.

Among examples of the component (i), as examples of the acid halide, acetic acid chloride, propionic acid chloride, butanoic acid chloride, isobutanoic acid chloride, octanoic acid chloride, acrylic acid chloride, benzoic acid chloride, stearic acid chloride, phthalic acid chloride, maleic acid chloride, oxalic acid chloride, acetyl iodide, benzoyl

iodide, acetyl fluroride, benzoyl fluoride, and the like can be given.

Among examples of the component (i), as examples of the ester compound, ethyl acetate, ethyl stearate, diethyl adipate, diethyl maleate, methyl benzoate, ethyl acrylate, ethyl methacrylate, diethyl phthalate, dimethyl terephthalate, tributyl trimellitate, tetraoctyl pyromellitate, hexaethyl mellitate, phenyl acetate, polymethyl methacrylate, polyethyl acrylate, and polyisobutyl acrylate, and the like can be given. As examples of the carbonate compound, dimethyl carbonate, diethyl carbonate, dipropyl carbonate, dihexyl carbonate, diphenyl carbonate, and the like can be given.

Among examples of the component (i), as examples of the acid anhydride, intermolecular acid anhydrides of acetic anhydride, propionic anhydride, isobutyric anhydride, isovaleric anhydride, heptanoic anhydride, benzoic anhydride, cinnamic anhydride, and the like; and intramolecular acid anhydride shown by the formula (5) such as succinic anhydride, methylsuccinic anhydride, maleic anhydride, glutaric anhydride, citraconic anhydride, phthalic anhydride, styrene-maleic anhydride copolymers, and the like can be given.

The compounds described as the component (i) may contain an aprotic polar group such as an ether group and a tertiary amino group in the molecule to an extent not impairing the object of the present invention. The component (i) mentioned above can be used individually or in combination of two or more. The component (i) may also contain a compound containing a free alcoholic or phenolic group as impurities.

Among examples of the component (j), as examples the compounds shown by the formula $R^{16}{}_1M''(OCOR^{17})_{4-1}$, the following compounds can be given: triphenyltinlaurate, triphenyltin-2-ethylhexanoate, triphenyltinnaphthate, triphenyltinacetate, triphenyltinacrylate, tri-n-butyltinlaurate, tri-n-butyltin-2-ethylhexanoate, tri-n-butyltinnaphthate, tri-n-butyltinacetate, tri-n-butyltinacrylate, tri-t-butyltinlaurate, tri-t-butyltin-2-ethylhexanoate, tri-t-butyltinnaphthate, tri-t-butyltinacetate, tri-t-butyltinacrylate, triisobutyltinlaurate, triisobutyltin-2-ethylhexanoate, triisobutyltinnaphthate, triisobutyltinacetate, triisobutyltinacrylate, triisopropyltinlaurate, triisopropyltin-2-ethylhexanoate, triisopropyltinnaphthate, triisopropyltinacetate, triisopropyltinacrylate, trihexyltinlaurate, trihexyltin-2-ethylhexanoate, trihexyltinacetate, trihexyltinacrylate, trioctyltinlaurate, trioctyltin-2-ethylhexanoate, trioctyltinnaphthate, trioctyltinacetate, trioctyltinacrylate, tri-2-ethylhexyltinlaurate, tri-2-ethylhexyltin-2-ethylhexanoate, tri-2-ethylhexyltinnaphthate, tri-2-ethylhexyltinacetate, tri-2-ethylhexyltinacrylate, tristearyltinlaurate, tristearyltin-2-ethylhexanoate, tristearyltinnaphthate, tristearyltinacetate, tristearyltinacrylate, tribenzyltinlaurate, tribenzyltin-2-ethylhexanoate, tribenzyltinnaphthate, tribenzyltinacetate, tribenzyltinacrylate, diphenyltindilaurate, diphenyltin-2-ethylhexanoate, diphenyltinstearate, diphenyltindinaphthate, diphenyltindiacetate, diphenyltindiacrylate, di-n-butyltindilaurate, di-n-butyltindi-2-ethylhexanoate, di-n-butyltindistearate, di-n-butyltindinaphthate, di-n-butyltindiacetate, di-n-butyltindiacrylate, di-t-butyltindilaurate, di-t-butyltindi-2-ethylhexanoate, di-t-butyltindistearate, di-t-butyltindinaphthate, di-t-butyltindiacetate, di-t-butyltindiacrylate, diisobutyltindilaurate, diisobutyltindi-2-ethylhexanoate, diisobutyltindistearate, diisobutyltindinaphthate, diisobutyltindiacetate, diisobutyltindiacrylate, diisopropyltindilaurate, diisopropyltin-2-ethylhexanoate, diisopropyltindistearate, diisopropyltindinaphthate, diisopropyltindiacetate, diisopropyltindiacrylate, dihexyltindilaurate, dihexyltindi-2-ethylhexanoate, dihexyltindistearate, dihexyltindinaphthate, dihexyltindiacetate, dihexyltindiacrylate, di-2-ethylhexyltindilaurate, di-2-ethylhexyltin-2-ethylhexanoate, di-2-ethylhexyltindistearate, di-2-ethylhexyltindinaphthate, di-2-ethylhexyltindiacetate, di-2-ethylhexyltindiacrylate, dioctyltindilaurate, dioctyltindi-2-ethylhexanoate, dioctyltindistearate, dioctyltindinaphthate, dioctyltindiacetate, dioctyltindiacrylate, distearyltindilaurate, distearyltindi-2-ethylhexanoate, distearyltindistearate, distearyltindinaphthate, distearyltindiacetate, distearyltindiacrylate, dibenzyltindilaurate, dibenzyltindi-2-ethylhexanoate, dibenzyltindistearate, dibenzyltindinaphthate, dibenzyltindiacetate, dibenzyltindiacrylate, phenyltintrilaurate, phenyltintri-2-ethylhexanoate, phenyltintrinaphthate, phenyltintriacetate, phenyltintriacrylate, n-butyltintrilaurate, n-butyltintri-2-ethylhexanoate, n-butyltintrinaphthate, n-butyltintriacetate, n-butyltintriacrylate, t-butyltintrilaurate, t-butyltintri-2-ethylhexanoate, t-butyltintrinaphthate, t-butyltintriacetate, t-butyltintriacrylate, isobutyltintrilaurate, isobutyltintri-2-ethylhexanoate, isobutyltintrinaphthate, isobutyltintriacetate, isobutyltintriacrylate, isopropyltintrilaurate, isopropyltintri-2-ethylhexanoate, isopropyltintrinaphthate, isopropyltintriacetate, isopropyltintriacrylate, hexyltintrilaurate, hexyltintri-2-ethylhexanoate, hexyltintrinaphthate, hexyltintriacetate, hexyltintriacrylate, octyltintrilaurate, octyltintri-2-ethylhexanoate, octyltintrinaphthate, octyltintriacetate, octyltintriacrylate, 2-ethylhexyltintrilaurate, 2-ethylhexyltintri-2-ethylhexanoate, 2-ethylhexyltintrinaphthate, 2-ethylhexyltintriacetate, 2-ethylhexyltintriacrylate, stearyltintrilaurate, stearyltintri-2-ethylhexanoate, stearyltintrinaphthate, stearyltintriacetate, stearyltintriacrylate, benzyltintrilaurate, benzyltintri-2-ethylhexanoate, benzyltintrinaphthate, benzyltintriacetate, and benzyltintriacrylate.

As examples of the compound shown by the formula $R^{18}{}_1M''(OCO\text{-}R^{19}\text{-}COOR^{20})_{4-1}$ among the component (j), diphenyltinbismethylmalate, diphenyltinbis-2-ethylhexanoate, diphenyltinbisoctylmalate, diphenyltinbisoctylmalate, diphenyltinbisbenzylmalate, di-n-butyltinbismethylmalate, di-n-butyltinbis-2-ethylhexanoate, di-n-butyltinbisoctylmalate, di-n-butyltinbisbenzylmalate, di-t-butyltinbismethylmalate, di-t-butyltinbis-2-ethylhexanoate, di-t-butyltinbisoctylmalate, di-t-butyltinbisbenzylmalate, diisobutyltinbismethylmalate, diisobutyltinbis-2-ethylhexanoate, diisobutyltinbisoctylmalate, diisobutyltinbisbenzylmalate, diisopropyltinbismethylmalate, diisopropyltinbis-2-ethylhexanoate, diisopropyltinbisoctylmalate, diisopropyltinbisbenzylmalate, dihexyltinbismethylmalate, dihexyltinbis-2-ethylhexanoate, dihexyltinbisoctylmalate, dihexyltinbisbenzylmalate, di-2-ethylhexyltinbismethylmalate, di-2-ethylhexyltinbis-2-ethylhexanoate, di-2-ethylhexyltinbisoctylmalate, di-2-ethylhexyltinbisbenzylmalate, dioctyltinbismethylmalate, dioctyltinbis-2-ethylhexanoate, dioctyltinbisoctylmalate, dioctyltinbisbenzylmalate, distearyltinbismethylmalate, distearyltinbis-2-ethylhexanoate, distearyltinbisoctylmalate, distearyltinbisbenzylmalate, dibenzyltinbismethylmalate, dibenzyltinbis-2-ethylhexanoate, dibenzyltinbisoctylmalate, dibenzyltinbisbenzylmalate, diphenyltinbismethyladipate, diphenyltinbis-2-ethylhexanoate, diphenyltinbisoctyladipate, diphenyltinbisbenzyladipate, di-n-butyltinbismethyladipate, di-n-butyltinbis-2-ethylhexanoate, di-n-butyltinbisoctyladipate, di-n-butyltinbisbenzyladipate, di-t-butyltinbismethyladipate, di-t-butyltinbis-2-ethylhexanoate, di-t-butyltinbisoctyladipate, di-t-butyltinbisbenzyladipate, diisobutyltinbismethyladipate, diisobutyltinbis-2-ethylhexanoate, diisobutyltinbisoctyladipate, diisobutyltinbisbenzyladipate, diisopropyltinbismethyladipate, diisopropyltinbis-2-ethylhexanoate, diisopropyltinbisoctyladipate, diisopropyltinbisbenzyladipate, dihexyltinbismethyladipate, dihexyltinbis-2-ethylhexanoate, dihexyltinbismethyladipate, dihexyltinbisbenzyladipate, di-2-ethylhexyltinbismethyladipate, di-2-ethylhexyltinbis-2-ethylhexanoate, di-2-ethylhexyltinbisoctyladipate, di-2-ethylhexyltinbisbenzyladipate, dioctyltinbismethyladipate, dioctyltinbis-2-ethylhexanoate, dioctyltinbisoctyladipate, dioctyltinbisbenzyladipate, distearyltinbismethyladipate, distearyltinbis-2-ethylhexanoate, distearyltinbisoctyladipate, distearyltinbisbenzyladipate, dibenzyltinbismethyladipate, dibenzyltinbis-2-ethylhexanoate, dibenzyltinbisoctyladipate, dibenzyltinbisbenzyladipate, and the like can be given.

Among the component (j), as examples of the compounds shown by the above formula (5), diphenyltinmalate, di-n-butyltinmalate, di-t-butyltinmalate, diisobutyltinmalate, diisopropyltinmalate, dihexyltinmalate, di-2-ethylhexyltinmalate, dioctyltinmalate, distearyltinmalate, dibenzyltinmalate, diphenyltinadipate, di-n-butyltinadipate, di-t-butyltinadipate, diisobutyltinadipate, diisopropyltinadipate, dihexyltindiacetate, di-2-ethylhexyltinadipate, dioctyltinadipate, distearyltinadipate, and dibenzyltinadipate can be given.

An alkoxysilane compound having at least one epoxy group and/or isocyanate group in the molecule is suitably used as the component (k). As specific examples of the component (k), epoxy group-containing alkoxysilanes such as 3-glycidyloxypropyltrimethoxysilane, 3-glycidyloxypropyltriethoxysilane, (3-glycidyloxypropyl)methyldimethoxysilane, (3-glycidyloxypropyl)methyldiethoxysilane, β-(3,4-epoxycyclohexyl)trimethoxysilane, β-(3,4-epoxycyclohexyl)triethoxysilane, β-(3,4-epoxycyclohexyl)methyldimethoxysilane, β-(3,4-epoxycyclohexyl)ethyldimethoxysilane, condensates of 3-glycidyloxypropyltrimethoxysilane, and condensates of (3-glycidyloxypropyl)methyldimethoxysilane; isocyanate group-containing alkoxysilane compounds such as 3-isocyanatepropyltrimethoxysilane, 3-isocyanatepropyltriethoxysilane, (3-isocyanatepropyl)methyldimethoxysilane, (3-isocyanatepropyl)methyldiethoxysilane, condensates of 3-isocyanatepropyltrimethoxysilane, and condensates of (3-isocyanatepropyl)methyldimethoxysilane can be given.

When the component (k) is reacted to the active end of the polymer, a Lewis acid may be added to the reaction system in order to accelerate the reaction. The Lewis acid acts as a catalyst and accelerates the coupling reaction, whereby cold flow of the modified polymer is improved, resulting in improved storage stability. As specific examples of the Lewis acid, dibutyltindilaurate, dioctyltindilaurate, dibutyltinbis-2-ethylhexylmalatealkylmalate, dioctyltinbis-2-ethylhexylmalate, and alminumtriisopropoxide can be given.

The components (e) to (k) (hereinafter referred to from time to time as "modifier") can be used individually or in combination of two or more. The amount of the modifier used, in terms of the molar ratio of the component (a), is preferably 0.01 to 200, and more preferably 0.1 to 150. If less than 0.01, the reaction has a tendency to not proceed sufficiently. In addition, it may be difficult for the product to exhibit the improvement effect of mechanical properties and rubber elasticity. On the other hand, an amount exceeding 200 will promote no further effect of improving physical properties and is thus undesirable from the viewpoint of economy. In addition, toluene insoluble components (gel) tend to be easily produced in some cases.

The modification reaction using the above-mentioned modifier can be carried out by a method known in the art. For example, the method described in JP-A-11-35633 and the method described in JP-A-7-268132 may be used. After completion of the modification reaction, the catalyst is inactivated and, as required, a polymer stabilizer is added. The target polymer can be collected from the reaction product by a solvent removal and drying operation generally employed in the production of a conjugated diene polymer.

(Ethylene-α-olefin copolymer rubber)

There are no specific limitations to the ethylene-α-olefin copolymer rubber inasmuch as the copolymer rubber contains (a1) a structural unit derived from ethylene and (a2) a structural unit derived from α-olefin. In addition to the binary copolymer containing the structural unit (a1) and the structural unit (a2), the ethylene-α-olefin copolymer rubber may contain (a3) a structural unit derived from other monomers. Moreover, the ethylene-α-olefin copolymer rubber may be a multicomponent copolymer which contains four or more structural units, provided that the copolymer contains the structural unit (a1) and the structural unit (a2). The ethylene-α-olefin copolymer rubber may be used individually or in combination of two or more.

The proportion of the structural unit (a1) contained in the ethylene-α-olefin copolymer is preferably 35 mol% or more of 100 mol% of all structural units. If the proportion of the structural unit (a1) is less than 35 mol%, the mechanical strength tends to be insufficient. If the proportion of the structural unit (a1) is too large, pliability tends to be insufficient.

Accordingly, the proportion of the structural unit (a1) contained in the ethylene-α-olefin copolymer is more preferably 40 to 90 mol%, and particularly preferably 45 to 85 mol% of 100 mol% of all structural units.

As specific examples of the α-olefin forming the structural unit (a2), propylene, 1-butene, 2-butene, isobutene, 1-pentene, 2-methyl-1-butene, 2-methyl-2-butene, 3-methylbutene, 1-hexene, 4-methyl-1-pentene, 3-methyl-1-pentene, 1-heptene, 1-octene, 1-decene, 1-undecene, and the like can be given. Among these, propylene, 1-butene, and 1-octene are preferable. These α-olefins may be used either individually or in combination of two or more.

The proportion of the structural unit (a2) contained in the ethylene-α-olefin copolymer is preferably 5 to 65 mol%, more preferably 10 to 45 mol%, and particularly preferably 15 to 40 mol% of 100 mol% of all structural units. If the proportion of the structural unit (a2) is less than 5 mol%, it may be difficult for the copolymer rubber to exhibit the desired rubber elasticity. On the other hand, if the proportion of the structural unit (a2) is more than 65 mol%, the durability tends to decrease.

When the ethylene-α-olefin copolymer rubber contains the structural unit (a3), non-conjugated diene polymers can be given as examples of the monomer forming the structural unit (a3). As specific examples of a non-conjugated diene polymer, linear acyclic diene compounds such as 1,4-hexadiene, 1,5-hexadiene, and 1,6-hexadiene; branched acyclic diene compounds such as 5-methyl-1,4-hexadiene, 3,7-dimethyl-1,6-octadiene, 5,7-dimethylocta-1,6-diene, 3,7-dimethyl-1,7-octadiene, 7-methylocta-1,6-diene, and dihydromyrcene; alicyclic diene compounds such as tetrahydroindene, methyltetratetrahydroindene, dicyclopentadiene, bicyclo[2.2.1]-hepta-2,5-diene, 5-methylene-2-norbornene, 5-ethylidene-2-norbornene, 5-propenyl-2-norbornene, 5-isopropylidene-2-norbomene, 5-cyclohexylidene-2-norbornene, and 5-vinyl-2-norbornene can be given. Among these, 1,4-hexadiene, dicyclopentadiene, and 5-ethylidene-2-norbornene are preferable. These non-conjugated diene compounds may be used individually or in combination of two or more.

When the ethylene-α-olefin copolymer rubber contains the structural unit (a3), the proportion of the structural unit (a3) in the ethylene-α-olefin copolymer rubber is preferably 15 mol% or less, and more preferably 1 to 12 mol% of 100 mol% of all structural units. If the proportion of the structural unit (a3) is more than 15 mol%, the durability tends to decrease.

In addition, a halogenated copolymer in which some of the hydrogen atoms in the molecule of the ethylene-α-olefin copolymer rubber mentioned above are replaced by a halogen atom such as a chlorine atom, a bromine atom, or the like may be used as the ethylene-α-olefin copolymer rubber.

Furthermore, a graft polymer obtained by polymerizing an unsaturated monomer with the ethylene-α-olefin copolymer rubber mentioned above may be used as the ethylene-α-olefin copolymer rubber. As the unsaturated monomer, vinyl chloride; vinyl acetate; (meth)acrylic acid; (meth)acrylic acid derivatives such as methyl (meth)acrylate, glycidyl (meth)acrylate, and (meth)acrylamide; maleic acid; maleic acid derivatives such as maleic anhydride, maleimide, and dimethyl maleate; conjugation diene compounds such as butadiene, isoprene, and chloroprene; and the like can be given.

The crystallinity of the ethylene-α-olefin copolymer determined by X-ray diffraction measurement is preferably 20 mol% or less, and more preferably 15 mol% or less. If the crystallinity of the ethylene-α-olefin copolymer rubber is more than 20%, the pliability tends to decrease.

Furthermore, an oil-extended rubber obtained by the addition of a mineral oil softener to the ethylene-α-olefin copolymer rubber mentioned above may be used as the ethylene-α-olefin copolymer rubber. Such an oil-extended rubber is easy to handle. Therefore, if the oil-extended rubber is used as the ethylene-α-olefin copolymer rubber, the thermoplastic elastomer composition can be easily produced. The proportion of each of the ethylene-α-olefin copolymer rubber and the mineral oil softener contained in the oil-extended rubber is preferably 20 to 80 mass%, more preferably 25 to 75 mass%, and particularly preferably 30 to 70 mass% of 100 mass% of the total amount the oil-extended rubber.

The intrinsic viscosity (measures in decalin at 135°C) of the ethylene-α-olefin copolymer rubber is preferably 1.0 dl/g or more. If the intrinsic viscosity of the ethylene-α-olefin copolymer rubber is less than 1.0 dl/g, the rubber elasticity tends to decrease due to bleed-out of the mineral oil softener from the thermoplastic elastomer composition when the above-mentioned ethylene-α-olefin copolymer containing the oil extended rubber is used. If the intrinsic viscosity of the ethylene-α-olefin copolymer rubber is too large, on the other hand, moldability tends to decrease. Accordingly, the intrinsic viscosity of the ethylene-α-olefin copolymer is more preferably 2.0 to 7.0 dl/g, and particularly preferably 3.0 to 6.0 dl/g.

((B) (B-1) Thermoplastic resin and/or (B-2) thermoplastic resin composition)

The component (B-1) contained in the thermoplastic elastomer composition of the embodiment is (B-1) a Chermoplastic resin (hereinafter referred to from time to time as "component (B-1)") and/or (B-2) a thermoplastic resin composition (hereinafter referred to from time to time as "component (B-2)")as defined in claim 1.

((B-1) Thermoplastic resin)

As the component (B-1), aminoacrylamide polymer, crystalline olefin resin and its maleic anhydride graft polymer, amorphous olefin resin and its maleic anhydride graft polymer, polyisobutylene, ethylenevinyl chloride polymer, ethylenevinyl alcohol polymer and its ionomer, ethylene-vinyl acetate copolymer, ethylene-acrylate copolymer, polyisobutylene and its maleic anhydride graft polymer, chlorinated polypropylene, 4-methylpentene-1 resin, polystyrene, ABS resin, ACS resin, AS resin, AES resin, ASA resin, MBS resin, acrylic resin, methacrylic resin, vinyl chloride resin, vinylidene chloride resin, acrylate resin, methacrylic resin, vinyl chloride resin, vinylidene chloride resin, vinyl alcohol resin, vinyl acetal resin, methyl methacrylate resin, fluororesin, polyethylene terephthalate, polyacrylate can be given. Among these, crystalline olefin resin and amorphous olefin resin are preferable.
Although not specifically limited, an α-crystalline olefin resin containing α-olefin as a major component is preferable as the crystalline olefin resin. Specifically, an α-crystalline olefin resin containing 80 mol% or more (more preferably 90 mol% or more) α-olefin in 100 mol% of the crystalline olefin resin is preferable. The crystalline olefin resin may be a homopolymer of an α-olefin, a copolymer of two or more α-olefins, or a copolymer of an α-olefin and a monomer which is not an α-olefin. The crystalline olefin resin may also be a mixture of two or more of these polymers and/or copolymers.
As the α-olefin forming the crystalline olefin resin, an α-olefin having two or more carbon atoms is preferably used, with an α-olefin with 2 to 12 carbon atoms being more preferable.
As examples of the α-olefin, α-olefins having 2 to 12 carbon atoms such as ethylene, propene (hereinafter referred to as "propylene"), 1-butene, 1-pentene, 3-methyl-1-butene, 1-hexene, 3-methyl-1-pentene, 4-methyl-1-pentene, 3-ethyl-1-pentene, 1-octene, 1-decene, 1-undecene, and the like can be given. These α-olefins may be used either individually or in combination of two or more.
When the crystalline olefin resin is a copolymer, the copolymer may be either a random copolymer or a block copolymer, provided that in order for the random copolymer to have crystallinity, the total amount of the structural units excluding α-olefins is preferably 15 mol% or less (more preferably 10 mol% or less) of 100 mol% of the random copolymer. In the case of the block copolymer, the total amount of the structural units excluding α-olefins is preferably 40 mol% or less (more preferably 20 mol% or less) of 100 mol% of the block copolymer.
Although not specifically limited, an amorphous α-olefin resin containing an α-olefin as a major component is preferably used as the amorphous olefin resin. Specifically, an amorphous α-olefin resin containing 50 mol% or more (more preferably 60 mol% or more) α-olefin in 100 mol% of the amorphous olefin resin is preferable. The amorphous olefin resin may be a homopolymer of an α-olefin, a copolymer of two or more α-olefins, or a copolymer of an α-olefin and a monomer which is not an α-olefin. The amorphous olefin resin may also be a mixture of two or more of these polymers and/or copolymers.
As the α-olefin forming the amorphous olefin resin, the α-olefins having 3 or more carbon atoms are preferably used with an α-olefin with 3 to 12 carbon atoms which are given as examples in the case of the crystalline olefin resin being more preferable.
As examples of the amorphous olefin resin, homopolymers such as atactic polypropylene and atactic poly(1-butene), copolymers of propylene (50 mol% or more) and other α-olefins (e.g. ethylene, 1-butene, 1-pentene, 1-hexene, 4-methyl-1-pentene, 1-octene, and 1-decene), copolymers of 1-butene (50 mol% or more) and other α-olefins (e.g. ethylene, propylene, 1-pentene, 1-hexene, 4-methyl-1-pentene, 1-octene, and 1-decene), and the like can be given.
When the amorphous olefin resin is a copolymer, the copolymer may be either a random copolymer or a block copolymer. In the case of the block copolymer, the α-olefin unit used as a major component (propylene or 1-butene in the above-mentioned copolymer) must be bonded by means of an atactic structure. When the amorphous olefin resin is a copolymer of an α-olefin having 3 or more carbon atoms and ethylene, the amount of the α-olefin is preferably 50 mol% or more (more preferably 60 to 100 mol%) of 100 mol% of the copolymer.
The component (B-1) is preferably a thermoplastic resin having a melt tension of 3.0 cN or more at 210°C at a pulling rate of 2.0 m/min (such a thermoplastic resin is hereinafter referred to from time to time as "component (B-1-a)"). The melt tension of the component (B-1-a) is more preferably 5.0 cN or more, and still more preferably 8.0 cN or more. If the melt tension of the component (B-1-a) is less than 3.0 cN, the thermoplastic elastomer composition containing the component (B-1-a) may have a melt tension of less than 5.0 cN. When foamed, such a thermoplastic elastomer composition exhibits only a low foam expansion rate and it is difficult to form closed cells with a uniformly foamed shape. Accordingly, it is possible to obtain a foam product with a high frequency of closed cell formation, high uniformity in the shape of foam cells at a high foam expansion rate by using the component (B-1-a) having a melt tension not less than a specific value.

((B-2) Thermoplastic resin composition)

The thermoplastic resin composition (B-2) is an olefin resin composition.
As preferable examples of the thermoplastic resin composition contained in the component (B-2), the same crystalline

α-olefin thermoplastic resins and/or amorphous α-olefin thermoplastic resins as mentioned in the case of the component (B-1) can be given. It is preferable that the component (B-2) contain some of these thermoplastic resins and a hydrogenated diene polymer.

There are no specific limitations to the hydrogenated diene polymer included in the component (B-2) inasmuch as the polymer is a hydrogenated product of a diene copolymer containing a structural unit derived from a conjugated diene compound. Therefore, (I) a hydrogenated product of a polymer containing only a structural unit derived from a conjugated diene compound and (II) a hydrogenated product of a copolymer containing a structural unit derived from a conjugated diene compound and a structural unit derived from a compound copolymerizable with this conjugated diene compound and a polymer, such as a vinyl aromatic compound, and the like can be given.

(Hydrogenated diene polymer)

It is preferable that the thermoplastic elastomer composition of the embodiment include a hydrogenated diene polymer. Although any hydrogenated diene polymers obtained by hydrogenation of a conjugated diene polymer can be used, a hydrogenated diene polymer obtained by hydrogenating a random copolymer of a conjugated diene and an aromatic vinyl compound, and a hydrogenated diene polymer obtained by hydrogenating a block copolymer which includes two or more blocks selected from a group consisting of the following blocks (i) to (v) is preferable.

(i) An aromatic vinyl compound polymer block with an aromatic vinyl compound content of 80 mass% or more.
(ii) A conjugated diene polymer block with a conjugated diene content of 80 mass% or more.
(iii) A conjugated diene polymer block with a total content of 1,2-bond and 3,4-bond of less than 25 mass%.
(iv) A conjugated diene polymer block with a total content of 1,2-bond and 3,4-bond of 25 to 90 mass%.
(v) A random copolymer block of an aromatic vinyl compound and a conjugated diene.

The random copolymer block of the above-mentioned (v) may include a taper-type random copolymer block in which the content of the aromatic vinyl compound continuously changes in one molecule. As examples of the block structure which includes two or more blocks selected from the group consisting of the above blocks (i) to (v), the following block structures can be given.

(i)-(ii), (i)-(iii), (i)-(iv), (i)-(v), (iii)-(iv), (iii)-(v), $[(i)-(ii)]_x$-Y, $[(i)-(iii)]_x$-Y, $[(i)-(iv)]_x$-Y, $[(i)-(v)]_x$-Y, $[(iii)-(iv)]_x$-Y, $[(iii)-(v)]_x$-Y, (i)-(ii)-(iii), (i)-(ii)-(v), (i)-(ii)-(i), (i)-(iii)-(i), (i)-(iv)-(i), (i)-(iv)-(iii), (iii)-(iv)-(iii), (i)-(v)-(i), $[(i)-(ii)-(iii)]_x$-Y, $[(i)-(ii)-(v)]_x$-Y, $[(i)-(ii)-(i)]_x$-Y, $[(i)-(iii)-(i)]_x$-Y, $[(i)-(iv)-(i)]_x$-Y, $[(i)-(iv)-(iii)]_x$-Y, $[(i)-(v)-(i)]_x$-Y, (i)-(ii)-(i)-(ii), (ii)-(i)-(ii)-(i), (i)-(iii)-(i)-(iii), (iii)-(i)-(iii)-(i), $[(i)-(ii)-(ii)-(ii)]_x$-Y, (i)-(ii)-(i)-(ii)-(i), $[(i)-(ii)-(i)-(ii)-(i)]_x$-Y, $[(ii)-(i)]_x$-Y, $[(iii)-(i)]_x$-Y, $[(iv)-(i)]_x$-Y, $[(v)-(i)]_x$-Y, (ii)-(i)-(ii)-(iii), (ii)-(i)-(ii)-(v), (ii)-(i)-(iii)-(i), (iii)-(i)-(iv)-(i), (iii)-(i)-(iv)-(iii), (iii)-(i)-(v)-(i), $[(iii)-(i)-(ii)-(iii)]_x$-Y, $[(iv)-(i)-(ii)-(v)]_x$-Y, $[(iv)-(i)-(ii)-(i)]_x$-Y, $[(iv)-(i)-(iii)-(i)]_x$-Y, $[(iv)-(i)-(iv)-(i)]_x$-Y, $[(iv)-(i)-(iv)-(iii)]_x$-Y, $[(iv)-(i)-(v)-(i)]_x$-Y, (iv)-(i)-(ii)-(i)-(ii), (iv)-(ii)-(i)-(ii)-(i), (iv)-(i)-(iii)-(i)-(iii), (iv)-(iii)-(i)-(iii)-(i), $[(iv)-(i)-(ii)-(i)-(ii)]_x$-Y, (iv)-(i)-(ii)-(i)-(ii)-(i), $[(iv)-(i)-(ii)-(i)-(ii)-(i)]_x$-Y

In the above block structures, $x \geq 2$ and Y is a residue of a coupling agent. When the block copolymer is molded into pellets, it is a preferable that the polymer block (i) and/or the polymer block (iii) be contained as outside block components.

In the case where the block copolymer is a modified block copolymer containing the residue of a coupling agent, a halogenated compound, an epoxy compound, a carbonyl compound, a polyvinyl compound, and the like can be given as examples of the coupling agent. As specific examples, methyldichlorosilane, methyltrichlorosilane, butyltrichlorosilane, tetrachlorosilane, dibromoethane, epoxidized soybean oil, divinylbenzene, tetrachlorotin, butyltrichlorotin, tetrachlorogermanium, bis(trichlorosilyl)ethane, diethyl adipate, dimethyl adipate, dimethyl terephthalate, diethyl terephthalate, and polyisocyanate can be given.

The microstructure of the hydrogenated diene polymer, specifically, the contents of 1,2-bond and 3,4-bond, can be controlled using a Lewis base together with a hydrocarbon solvent. As examples of the Lewis base, ether, an amine, and the like can be given. More specifically, (1) diethyl ether, tetrahydrofuran, propyl ether, butyl ether, higher ether, tetrahydrofurfuryl methyl ether, tetrahydrofurfuryl ethyl ether, 1,4-dioxane, bis(tetrahydrofurfuryl) formal, 2,2-bis (2-tetrahydrofurfuryl) propane, ether derivatives of polyalkylene glycol such as ethylene glycol dibutyl ether, diethylene glycol dimethyl ether, propylene glycol diethyl ether, and propylene glycol ethylpropyl ether; and (2) tertiary amines such as tetramethylethylenediamine, pyridine, and tributylamine can be given.

When the hydrogenated diene polymer is a hydrogenated modified diene polymer, the modified diene polymer before hydrogenation can be obtained by reacting a conjugated diene polymer with an alkoxysilane compound. Preferably, the modified conjugated diene polymer can be obtained by reacting an alkoxysilane compound with an active terminal of the conjugated diene polymer to bond a polar group at the polymer terminal. A hydrogenated modified diene polymer having excellent affinity with a polar resin and a filler and exhibiting excellent heat resistance, impact resistance, strength, and adhesiveness as compared with a hydrogenated modified diene polymer produced by a general method can be

obtained by using this method. Although an appropriated amount of alkoxysilane compound may be added in the reaction without a particular limitation, usually such an amount is 10 mol% or more, preferably 20 mol% or more, and more preferably 30 mol% or more of the conjugated diene polymer. The amount of the modifier added varies according to the molecular weight. Usually such an amount is 0.001 mass% or more, preferably 0.01 mass% or more, and more preferably 0.02 mass% or more. The modifier in this range can provide the ultimately obtained hydrogenated conjugated diene polymer with sufficient affinity with a polar resin and a filler.

The structure of the alkoxysilane compound used for producing the hydrogenated modified diene polymer is not particularly limited insofar as the compound can react and modify the conjugated diene polymer. Usually, an alkoxysilane compound shown by the following formula (7) can be used.

$$R^1_{(4-m-n)}Si(OR^2)_mX_n \qquad (7)$$

In the formula (7), $R^1$ is an alkyl group having 1 to 20 carbon atoms, an aryl group having 6 to 20 carbon atoms, an aralkyl group having 7 to 20 carbon atoms, or an organosiloxy group. When there are two or more $R^1$ s, the $R^1$ s may be the same or different. $R^2$ is an alkyl group having 1 to 20 carbon atoms, an aryl group having 6 to 20 carbon atoms, or an aralkyl group having 7 to 20 carbon atoms. When there are two or more $R^2$s, the $R^2$s may be the same or different. X is a substituent containing a polar group which contains at least one of a nitrogen atom, oxygen atom, and silicon atom. When there are two or more Xs, these Xs may be the same or different and each may be either an independent substituent or may form a cyclic structure. m is 1, 2, or 3, and n is 0, 1, 2, or 3. The sum of m and n is 1 to 4.

As specific examples of the alkoxysilane compound shown by the above formula (7), aliphatic hydrocarbon alkoxysilane compounds such as tetraethoxysilane, tetramethoxysilane, methyltrimethoxysilane, methyltriethoxysilane, methyltributoxysilane, methylpropoxysilane, ethyltrimethoxysilane, ethyltriethoxysilane, ethyltributoxysilane, ethyltripentyloxysilane, ethyltrineopentyloxysilane, ethyltrihexyloxysilane, phenyltrimethoxysilane, phenyltriethoxysilane, phenyltributoxysilane, dimethyldimethoxysilane, dimethyldiethoxysilane, dimethyldibutoxysilane, diethyldimethoxysilane, diethyldiethoxysilane, diethyldibutoxysilane, diphenyldimethoxysilane, diphenyldiethoxysilane, and diphenyldibutoxysilane; and aromatic hydrocarbon alkoxysilane compounds such as methyltriphenoxysilane, ethyltriphenoxysilane, phenyltriphenoxysilane, dimethyldiphenoxysilane, diethyldiphenoxysilane, and diphenyldiphenoxysilane can be given.

As specific examples of the alkoxysilane compound having a nitrogen atom in X which is a polar group in the above formula (7), a compound converted into a primary amine by dissociation of a protective group by hydrolysis such as N,N-di(trimethylsilyl)aminopropyltrimethoxysilane, N,N-di(trimethylsilyl)aminopropyltriethoxysilane, N,N-bis(trimethylsilyl)aminopropyldimethylethoxysilane, N,N-bis(trimethylsilyl)aminopropyldimethylmethoxysilane, N,N-bis(trimethylsilyl)aminopropylmethyldiethoxysilane, N,N-bis(trimethylsilyl)aminopropylmethyldimethoxysilane, N,N-di(trimethylsilyl) aminoethyltrimethoxysilane, N,N-di(trimethylsilyl)aminoethyltriethoxysilane, N,N-bis(trimethylsilyl)aminoethyldimethylethoxysilane, N,N-bis(trimethylsilyl)aminoethyldimethylmethoxysilane, N,N-bis(trimethylsilyl)aminoethylmethyldiethoxysilane, N,N-bis(trimethylsilyl)aminoethylmethyldimethoxysilane, 1-trimethylsilyl-2-dimethoxy-1-aza-2-silacyclopentane, and 1-trimethylsilyl-2-diethoxy-1-aza-2-silacyclopentane; secondary amines or compounds converted into a secondary amine by dissociation of a protective group by hydrolysis such as N-methyl-N-trimethylsilylaminopropyltrimethoxysilane, N-methyl-N-trimethylsilylaminopropyltriethoxysilane, N-methyl-N-trimethylsilylaminopropyldimethylethoxysilane, N-methyl-N-trimethylsilylaminopropyldimethylmethoxysilane, N-methyl-N-trimethylsilylaminopropylmethyldiethoxysilane, N-methyl-N-trimethylsilylaminopropylmethyldimethoxysilane, N-methyl-N-trimethylsilylaminoethyltrimethoxysilane, N-methyl-N-trimethylsilylaminoethyltriethoxysilane, N-methyl-N-trimethylsilylaminoethyldimethylethoxysilane, N-methyl-N-trimethylsilylaminoethyldimethylmethoxysilane, N-methyl-N-trimethylsilylaminoethylmethyldiethoxysilane, N-methyl-N-trimethylsilylaminoethylmethyldimethoxysilane, N-phenyl-γ-aminopropyltrimethoxysilane, N-phenyl-γ-aminopropyltriethoxysilane, dimethoxymethyl-3-piperazinopropylsilane, and 3-piperazinopropyltrimethoxysilane; and tertiary amines such as N,N-dimethylaminopropyltrimethoxysilane, N,N-dimethylaminopropyltriethoxysilane, N,N-dimethylaminopropyldimethylethoxysilane, N,N-dimethylaminopropyldimethylmethoxysilane, N,N-dimethylaminopropylmethyldiethoxysilane, N,N-dimethylaminopropylmethyldimethoxysilane, N,N-dimethylaminoethyltrimethoxysilane, N,N-dimethylaminoethyltriethoxysilane, N,N-bismethylaminoethyldimethylethoxysilane, N,N-bismethylaminoethyldimethylmethoxysilane, dimethoxymethyl-2-piperizinoethylsilane, and 2-piperizinoethyltrimethoxysilane can be given.

As specific examples of the alkoxysilane compound having an oxygen atom in X which is a polar group in the above formula (7), γ-glycidoxypropyltrimethoxysilane, γ-glycidoxypropylmethyldimethoxysilane, γ-glycidoxypropylmethyldiethoxysilane, γ-glycidoxypropyltriethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethylmethyldimethoxysilane, β-(3,4-epoxycyclohexyl)ethylmethyldiethoxysilane, γ-glycidoxypropyltriphenoxysilane, γ-glycidoxypropylmethyldiphenoxysilane, γ-glycidoxypropymethylphenoxyethoxysilane, γ-glycidoxypropyldiethoxyphenoxysilane, γ-methacryloxypropylmethyldiphenoxysilane, and the like can be given.

As specific examples of the alkoxysilane compound having a silicon atom in X which is a polar group in the

above formula (7), trimethylsiloxytriphenoxysilane, trimethylsiloxytrimethoxysilane, trimethylsiloxytriethoxysilane, trimethylsiloxytributoxysilane, and 1,1,3,3-tetramethyl-1-phenoxydisiloxane can be given.

Among these, the aromatic hydrocarbon-containing alkoxysilane compound and the alkoxysilane compound having X which has a polar group are preferable from the viewpoint of the modification reaction, the hydrogenation reaction, and improvement of properties. Of these, the alkoxysilane compound having X which has a polar group is preferred. Among the alkoxysilane compounds having X having a polar group, nitrogen-containing compounds, particularly compounds having a protected primary amino group or secondary amino group, which is converted into a primary or secondary amine such as a trimethylsilyl group when the protective group is removed, are preferable from the viewpoint of improvement of properties. A compound having a protected primary amino group is particularly preferable.

The hydrogenated diene polymer can be obtained by partially or selectively hydrogenating a conjugated diene polymer. Although not particularly limited, the hydrogenation reaction is carried out usually at a temperature of 20 to 150°C and a hydrogen pressure of 0.1 to 10 MPa in the presence of a hydrogenation catalyst. The rate of hydrogenation can be arbitrarily selected by changing the amount of the hydrogenated catalyst, the hydrogen pressure, and the reaction time of the hydrogenation reaction. The hydrogenation rate is usually 10% or more of the aliphatic double bonds of the conjugated diene which is an unsaturated part. In order to improve heat resistance and weather resistance, a preferable hydrogenation rate is 50% or more, with a more preferable hydrogenation rate being 80% or more. A particularly preferable hydrogenation rate is 95% or more.

The hydrogenated catalyst that can be used is a compound containing a metal belonging to the groups Ib, IVb, Vb, VIb, VIIb, or VIII of the periodic table, for example, a compound containing Ti, V, Co, Ni, Zr, Ru, Rh, Pd, Hf, Re, or Pt. As more specific examples of the hydrogenation catalyst, a metallocene compound of Ti, Zr, Hf, Co, Ni, Pd, Pt, Ru, Rh, Re, or the like, a supported heterogeneous catalyst comprising a carrier such as carbon, silica, alumina, diatomaceous earth, or the like on which a metal such as Pd, Ni, Pt, Rh, Ru, or the like is supported, a homogeneous Ziegler catalyst in which an organic salt or an acetylacetone salt of a metal such as Ni, Co, or the like is combined with a reducing agent such as an organoaluminum, and an organometallic compound of Ru, Rh or the like can be given. These hydrogenation catalysts can be used individually or in combination of two or more. Of these, the metallocene compound containing Ti, Zr, Hf, Co, or Ni is preferable due to the capability of allowing a hydrogenation reaction in a homogeneous system in an inert organic solvent. Metallocene compounds containing Ti, Zr, or Hf are more preferable. Particularly, a hydrogenated catalyst obtained by reacting a titanocene compound with an alkyl lithium is an inexpensive and industrially useful catalyst. As specific examples, hydrogenation catalysts described in JP-A-1-275605, JP-A-5-271326, JP-A-5-271325, JP-A-5-222115, JP-A-11-292924, JP-A-2000-37632, JP-A-59-133203, JP-A-63-5401, JP-A-62-218403, JP-A-7-90017, JP-B-43-19960, or JP-B-47-40473 can be given.

After hydrogenation, the hydrogenated diene polymer is isolated from the hydrogenated diene polymer solution after removing the catalyst residue and adding a phenol or amine aging preventive, as required, The hydrogenated diene polymer can be isolated by, for example, a method of precipitating the polymer by adding acetone or alcohol to the hydrogenated diene polymer solution or a method of adding the hydrogenated diene polymer solution to boiling water while stirring and removing the solvent by distillation. A hydrogenated diene polymer with excellently improved heat resistance, impact resistance, strength, and adhesive molding processability can be obtained in this manner.

The following commercially-available hydrogenated diene polymers may be used. For example, "Septon" and "HYbrar" manufactured by Kuraray Co., Ltd., "Tuftech" manufactured by Asahi Kasei Corporation, "Dynaron" manufactured by JSR Corp, "Kraton" manufactured by Kraton Polymers, Inc., and the like can be used.

The mass ratio of the thermoplastic resin and the hydrogenated diene polymer contained in the component (B-2) is preferably thermoplastic resin/hydrogenated diene polymer = 99/1 to 20/80, more preferably 98/2 to 30/70, and particularly preferably 97/3 to 40/60. If the content of the thermoplastic resin is less than 20% and the content of the hydrogenated diene polymer is more than 80%, the resulting component (B-2) tends to have impaired molding processability. On the other hand, if the content of the thermoplastic resin is more than 99% and the content of the hydrogenated diene polymer is less than 1%, pliability and rubber elasticity of the resulting component (B-2) tends to decrease and the compression set tends to be 60% or more.

The component (B-2) is preferably a thermoplastic resin composition having a melt tension of 3.0 cN or more at 210°C at a pulling rate of 2.0 m/min (such a thermoplastic resin composition is herein after referred to from time to time as "component (B-2-a)"). The melt tension of the component (B-2-a) is more preferably 5.0 cN or more, and particularly preferably 8.0 cN or more. If the melt tension of the component (B-2-a) is less than 3.0 cN, the thermoplastic elastomer composition containing the component (B-2-a) may have a melt tension of less than 5.0 cN. When foamed, such a thermoplastic elastomer composition exhibits only a low foam expansion rate and it is difficult to form closed cells with a uniformly foamed shape. Accordingly, it is possible to obtain a foam product with a high frequency of closed cell formation, and high uniformity in the shape of foam cells at a high foam expansion rate by using the component (B-2-a) having a melt tension not less than a specific value.

The compression set of the component (B-2) is preferably 60% or less, and more preferably 50% or less. If the compression set of the component (B-2) is more than 60%, pliability and rubber elasticity of the thermoplastic elastomer

composition containing the component (B-2) tend to decrease. Accordingly, it is possible to obtain a foam product having excellent rubber elasticity and pliability by using the component (B-2) having a compression set not less than a specific value.

The component (B-1) and the component (B-2) can be used individually or in combination of two or more.

(Ratio of component (A) and component (B))

The mass ratio of the component (A) and the component (B) included in the thermoplastic elastomer composition of the embodiment is preferably (A)/(B) = 95/5 to 20/80, more preferably 90/10 to 20/80, and particularly preferably 90/10 to 30/70. If the content of the component (A) is less than 20% and the content of the component (B) is more than 80%, pliability and rubber elasticity of the resulting thermoplastic elastomer composition tends to decrease. Accordingly, it is possible to obtain a foam product having excellent rubber elasticity and pliability by using the thermoplastic elastomer composition having 20% or more of the component (A) and 80% or less of the component (B). If the content of the component (A) is more than 95% and the content of the component (B) is less than 5%, it is difficult for the resulting thermoplastic elastomer composition to have a good sea-island phase structure (morphology) which is a characteristic of a dynamically cross-linked thermoplastic elastomer composition, in which the thermoplastic resin is the sea (matrix) and the cross-linked particles are islands (domain). Fluidity and moldability tend to decrease.

(Thermoplastic elastomer composition)

The thermoplastic elastomer composition of the embodiment is formed by dynamic heat treatment of a mixture of the component (A) and component (B) in the presence of a crosslinking agent ((hereinafter referred to from time to time as "component (C)"). The term "dynamic heat treatment" herein refers to both the treatment of applying stress and the treatment of applying heat. The thermoplastic elastomer composition of the embodiment formed by such a dynamic heat treatment has a sea-island structure in which the component (B) functions as a sea phase of the component (B) in which particles of the component (A) are scattered as islands.

It is also preferable that the thermoplastic elastomer composition of the embodiment be produced by preparing a mixture of the component (A) and a crystalline α-olefin thermoplastic resin (B-1-b) and/or an amorphous α-olefin thermoplastic resin having a melt tension of less than 3.0 cN at 210°C at a pulling rate of 2.0 m/min, dynamically treating the mixture with heat in the presence of the crosslinking agent (C), and adding the component (B-1-a) and/or the component (B-2-a). That is to say, the thermoplastic elastomer composition of the embodiment obtained by such a dynamic heat treatment has a sea-island structure in which the component (B-1-b) functions as a sea phase in which particles of the component (A) are scattered as islands, and may further contain the later-added component (B-1-a) and/or component (B-2-a).

(Crosslinking agent (C))

The thermoplastic elastomer composition of the embodiment is obtained by the dynamic heat treatment. The type of the component (C) used in the dynamic heat treatment is not particularly limited, but preferably is a compound which crosslinks at least the component (A) by dynamic heat treatment at a temperature higher than the melting point of the component (B-1-a) and/or component (B-2-a) or the component (B-1-b).

As specific examples of the component (C), an organic peroxide, a phenol resin, sulfur, a sulfur compound, p-quinone, a derivative of p-quinone dioxime, a bismaleimide compound, an epoxy compound, a silane compound, an amino resin, polyol, polyamine, a triazine compound, and metallic soap can be given. Among these, the organic peroxide and phenol resin are preferable. These compounds may be used either individually or in combination of two or more.

As the organic peroxide, 1,3-bis(t-butylperoxyisopropyl)benzene, 2,5-dimethyl-2,5-bis(t-butylperoxy)hexyne-3, 2,5-dimethyl-2,5-bis(t-butylperoxy)hexene-3, 2,5-dimethyl-2,5-bis(t-butylperoxy)hexane, 2,2'-bis(t-butylperoxy)-p-isopropylbenzene, dicumyl peroxide, di-t-butyl peroxide, t-butyl peroxide, p-menthane peroxide, 1,1-bis(t-butylperoxy)-3,3,5-trimethylcyclohexane, dilauroyl peroxide, diacetyl peroxide, t-butyl peroxybenzoate, 2,4-dichlorobenzoyl peroxide, p-chlorobenzoyl peroxide, benzoyl peroxide, di(t-butylperoxy) perbenzoate, n-butyl-4,4-bis(t-butylperoxy)valerate, t-butyl peroxyisopropylcarbonate, and the like can be given. Among these, 1,3-bis(t-butylperoxyisopropyl) benzene, 2,5-dimethyl-2,5-di(t-butylperoxy)hexin-3, 2,5-dimethyl-2,5-di(t-butylperoxy)hexane, α,α-bis(t-butylperoxy)diisopropylbenzene, dicumylperoxide, and di-t-butylperoxide are preferable. These organic peroxides may be used either individually or in combination of two or more.

As examples of the phenol resin, a p-substituted phenol compound shown by the following formula (8), an o-substituted phenol-aldehyde condensate, an m-substituted phenol-aldehyde condensate, a brominated alkylphenol-aldehyde condensate, and the like can be given. Among these, p-substituted phenol compounds are preferable. These phenol resins may be used either individually or in combination of two or more.

[Formula 7]

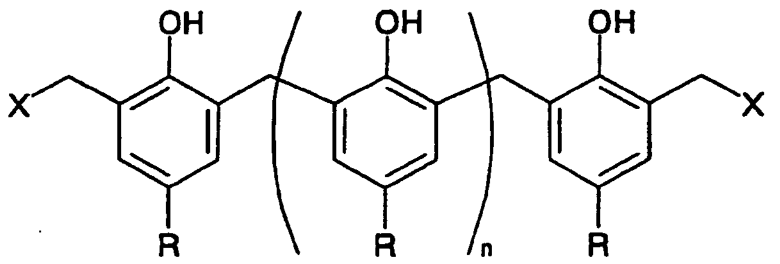

(8)

In the formula (8), X represents a hydroxyl group, a halogenated alkyl group, or a halogen atom, R is a saturated hydrocarbon group having 1 to 15 carbon atoms, and n is an integer of 1 to 10. The p-substituted phenol compounds can be obtained by the condensation reaction of p-substituted phenol and aldehyde (preferably formaldehyde) in the presence of an alkaline catalyst.

As commercially available products of the phenol resin, "Tackyrol 201" (alkylphenol formaldehyde resin manufactured by Taoka Chemical Co., Ltd.), "Tackyrol 250-I" (4% brominated alkylphenol formaldehyde resin manufactured by Taoka Chemical Co., Ltd.), "Tackyrol 250-III" (brominated alkylphenol formaldehyde resin manufactured by Taoka Chemical Co., Ltd.), "PR-4507" (manufactured by Gun-ei Chemical Industry Co., Ltd.), "ST137X" (manufactured by Loam & Haas), "Sumilight Resin PR-22193" manufactured by Sumitomo Durez Co., Ltd.), "Tamanor 531" (manufactured by Arakawa Chemical Industries, Ltd.), "SP1059", "SP1045", "SP1055", and"SP1056" (manufactured by Schenectady Co.), and "CRM-0803" (manufactured by Showa Union KK.), and the like can be given. Among these, "Tackyrol 201" is preferable.

The amount of the component (C) used is preferably 0.01 to 20 parts by mass, more preferably 0.1 to 15 parts by mass, and still more preferably 1 to 10 parts by mass for 100 parts by mass of total of the component (A) and component (B).

When an organic peroxide is used as the component (C), the amount of the organic peroxide used is preferably 0.05 to 10 parts by mass, and more preferably 0.1 to 5 parts by mass for 100 parts by mass of the total amount of the component (A) and component (B) included in the mixture for producing the thermoplastic elastomer composition. If the amount of the organic peroxide is more than 10 parts by mass, the degree of crosslinking becomes excessive, molding processability is reduced, and the mechanical properties of the resulting thermoplastic elastomer composition tend to be poor. If the amount of the organic peroxide is less than 0.05 parts by mass, the degree of crosslinking becomes insufficient, rubber elasticity and the mechanical properties of the resulting thermoplastic elastomer composition tend to be poor.

When a phenol resin is used as the component (C), the amount of the phenol resin used is preferably 0.2 to 10 parts by mass, and more preferably 0.5 to 5 parts by mass for 100 parts by mass of the total amount of the component (A) and component (B) included in the mixture for producing the thermoplastic elastomer composition. If the amount of the phenol resin is more than 10 parts by mass, molding processability tends to become poor. If the amount of the phenol resin is less than 0.2 parts by mass, on the other hand, the degree of crosslinking becomes insufficient, and rubber elasticity and the mechanical properties of the resulting thermoplastic elastomer composition tend to be poor.

Use of a crosslinking assistant and/or a crosslinking promoter together with the crosslinking agent is preferable in order to carry out a mild crosslinking reaction and to accomplish uniform crosslinking. When an organic peroxide is used as the crosslinking agent, use of a crosslinking assistant is preferable. Examples of the crosslinking assistant include sulfur, sulfur compounds (sulfur powder, colloidal sulfur, precipitated sulfur, insoluble sulfur, surface treated sulfur, dipentamethylenethiuram tetrasulfide, etc.), oxime compounds (p-quinoneoxime, p,p'-dibenzoylquinoneoxime, etc.), and polyfunctional monomers (ethylene glycol di(meth)acrylate, diethylene glycol di(meth)acrylate, triethylene glycol di(meth)acrylate, tetraethylene glycol di(meth)acrylate, polyethylene glycol di(meth)acrylate, trimethylolpropane tri(meth)acrylate, diallyl phthalate, tetraallyloxyethane, triallylcyanurate, N,N'-m-phenylene bismaleimide, N,N'-toluylene bismaleimide, maleic anhydride, divinylbenzene, zinc di(meth)acrylate, etc.). Among these, p,p'-dibenzoylquinoneoxime, N,N'-m-phenylene bismaleimide, and divinylbenzene are preferable. These phenol resins may be used either individually or in combination of two or more. N,N'-m-phenylene bismaleimide may be used as a crosslinking agent alone, because this compound has the function of a crosslinking agent.

When an organic peroxide is used as the crosslinking agent, the amount of the crosslinking assistant used is preferably 10 parts by mass or less, and more preferably 0.2 to 5 parts by mass for 100 parts by mass of the total amount of the component (A) and component (B) included in the mixture. If the amount of the crosslinking assistant is more than 10 mass%, the degree of crosslinking becomes excessive, molding processability is reduced, and the mechanical properties of the resulting thermoplastic elastomer composition tend to be poor.

When a phenol resin is used as a crosslinking agent, a cross-linking promoter is used. Use of a metallic halide (stannous chloride, ferric chloride, etc.), an organic halide (chlorinated polypropylene, brominated butyl rubber, chloroprene rubber, etc.), and the like as a cross-linking promoter is preferable in order to control the crosslinking speed. In addition to the crosslinking promoter, use of a dispersant such as metal oxide (e.g. zinc oxide) or stearic acid is more desirable.

(Softener)

It is preferable that the thermoplastic elastomer composition of the embodiment further include a softener. The addition of a softener can improve processability and pliability. Various softeners commonly used in rubber products can be suitably utilized.

As specific examples of the softener, petroleum products such as process oil, lubricating oil, paraffin, liquid paraffin, petroleum asphalt, and petroleum jelly; coal tars such as coal tar and coal tar pitch; fatty oils such as castor oil, linseed oil, rape seed oil, soya bean oil, and coconut oil; waxes such as tall oil, beeswax, carnauba wax, and lanolin; fatty acids such as recinoleic acid, palmitic acid, stearic acid, barium stearate, and calcium stearate or metal salts of these fatty acids; synthetic polymers such as petroleum resin, coumarone indene resin, and atactic polypropylene; ester compounds such as dioctyl phthalate, dioctyl adipate, and dioctyl sebacate; microcrystalline wax, factice, liquid polybutadiene, modified liquid polybutadiene, liquid thiokol, liquid polyisoprene, liquid polybutene, liquid ethylene-$\alpha$-olefin copolymer, and the like can be given. Among these, paraffinic, naphthenic, and aromatic mineral oils, liquid polyisoprene, liquid polybutene, liquid ethylene-$\alpha$-olefin copolymer are preferable, with paraffinic mineral oil, liquid polyisoprene, liquid polybutene, and liquid ethylene·$\alpha$-olefin copolymer being more preferable.

The content of the softener is preferably 0 to 200 parts by mass, more preferably 0 to 150 parts by mass, and particularly preferably 0 to 100 parts by mass for 100 parts by mass of the component (A). If the content of the softener is more than 200 parts by mass for 100 parts by mass of the component (A), the component (B) may not be sufficiently dispersed when the mixture of the component (A) and the component (B) is kneaded.

(Nucleating agent)

It is preferable that the thermoplastic elastomer composition of the embodiment further include a nucleating agent. As examples of the nucleating agent, powder of inorganic compounds such as calcium carbonate, talc, mica, silica, and titanium dioxide can be given. These nucleating agents can easily control the cell diameter and ensures production of a foam product with suitable pliability. Although not particularly limited, the particle diameter of the nucleating agent is preferably 2 to 50 $\mu$m, and more preferably 5 to 20 $\mu$m. If the nucleating agent particle diameter is less than 2 $\mu$m, the effect of the nucleating agent is obtained only with difficulty and the cell diameter tends to increase. If the nucleating agent particle diameter is more than 50 $\mu$m, the cell size increases, but the number of cells decreases. The foam product tends to be too pliable and to have poor cushioning properties.

The content of the nucleating agent is preferably 0 to 20 parts by mass, more preferably 0.01 to 15 parts by mass, and particularly preferably 0.1 to 10 parts by mass for 100 parts by mass of the total polymer components in the thermoplastic elastomer composition. Adding the nucleating agent to a molding machine as a master batch using a polypropylene resin, for example, is also a preferable method of using the nucleating agent.

(Additives)

It is preferable that the thermoplastic elastomer composition of the embodiment further include various additives, as required. Additives that can be used include a lubricant, an aging preventive, a heat stabilizer, a light resistant agent such as HALS, a weather resistant agent, a metal inactivator, a UV absorber, a light stabilizer, a stabilizer such as a copper inhibitor, an antiseptic agent, an antifungal agent, a dispersant, a flame retardant, a tackifier, a coloring agent such as titanium oxide, carbon black, and organic pigment, fillers such as a metal powder such as ferrite powder, inorganic fibers such as glass fibers and metal fibers, organic fibers such as carbon fibers and alamide fibers, composite fibers, inorganic whiskers such as potassium titanate whiskers, glass beads, glass balloons, glass flakes, mica, calcium carbonate, talc, silica, calcium silicate, hydrotalcite, kaolin, diatom earth, graphite, pumice, ebo powder, cotton flock, cork powder, barium sulfate, and wood powder, and a mixture of these.

The melt tension of the thermoplastic elastomer composition of the embodiment is 5.0 cN or more, preferably 7.0 cN or more, and more preferably 8.0 cN or more. If the melt tension is less than 5.0 cN, the thermoplastic elastomer composition exhibits only a low foam expansion rate and it is difficult to form independent cells and to obtain cells with a uniform shape. Accordingly, it is possible to obtain a foam product with a high frequency of closed cell formation, and high uniformity in the shape of foam cells at a high foam expansion rate by using the thermoplastic elastomer composition having a melt tension of a specific value.

The compression set of the thermoplastic elastomer composition of the embodiment is 80% or less, and preferably 70% or less. If the compression set is more than 80%, pliability and rubber elasticity of the foam product obtained from the thermoplastic elastomer composition are inferior. Accordingly, it is possible to obtain a foam product having excellent rubber elasticity and pliability by using a thermoplastic elastomer composition having a compression set not more than a specific value.

The melt flow rate (hereinafter may be referred to as "MFR") of the thermoplastic elastomer composition of the embodiment is 0.1 to 100 g/10min preferably 1.0 to 50 g/10 min, and more preferably 2.0 to 30 g/10 min at 230°C under a load of 98N. If the MFR is more than 100 g/10 min, the thermoplastic elastomer composition exhibits only a low foam expansion rate and it is difficult to form closed cells with a uniformly foamed shape. On the other hand, if the MFR of the thermoplastic elastomer composition is less than 0.1 g/10 min, processability in producing various foam products may be insufficient. Accordingly, it is possible to obtain a foam product having a high frequency of closed cell formation, and high uniformity in the shape of foam cells at a high foam expansion rate by using the thermoplastic elastomer composition having MFR of a specific value.

The hardness (Duro D) of the thermoplastic elastomer composition of the embodiment is 90 or less, preferably 80 or less, and more preferably 70 or less. If the hardness (Duro D) is more than 90, pliability of the foam product obtained from the thermoplastic elastomer composition is poor. Accordingly, it is possible to obtain a foam product having excellent rubber elasticity and pliability by using the thermoplastic elastomer composition component having a hardness (Duro D) not more than a specific value.

2. Preparation of thermoplastic elastomer composition

The thermoplastic elastomer composition of the embodiment is formed by dynamic heat treatment of a mixture prepared by adding a crosslinking agent (C) to a mixture of the component (A), the component (B-1-a) and /or the component (B-2-a). Alternatively, it is possible to add the crosslinking agent (C) to a mixture of the component (A) and the component (B-1-b), to dynamically treat the mixture with heat, and then add the component (B-1-a) and /or component (B-2-a).

When preparing a mixture to be used for dynamic heat treatment, the component (A), the component (B-1-a) and /or the component (B-2-a), and the component (B-1-b) may be used as is or in compositions of each of the component including the same or different additives. The component (A) may be of any form such as a veil, crumb, pellet, or powder, including pulverized veil-like rubber or crumb-like rubber. Two or more components (A) with different forms may be used in combination.

As examples of preferable apparatuses used for "dynamic heat treatment", a melt kneader and the like can be given. Treatment using the melt kneader may be carried out by either a continuous operation or a batch operation. As specific examples of the melt kneader, an open-type mixing roller, a closed-type Banbury mixer, a monoaxial extruder, a biaxial extruder, a continuous kneader, a pressure kneader, and the like can be given. Among these, continuous melt kneaders such as a monoaxial extruder, a biaxial extruder, and a continuous kneader are preferable from the viewpoint of economy, efficiency of treatment, and the like. Two or more continuous melt kneader apparatuses of the same type or different types may be used in combination.

The L/D ratio of a biaxial extruder, the ratio of the effective screw length (L) to the outer diameter (D), is preferably 30 or more, and more preferably 36 to 60. As the biaxial extruder, although any biaxial extruders including a biaxial extruder with two screws, geared or not geared to each other, may be used, a biaxial extruder having two gearing screws which rotate in the same direction is more preferable. As examples of commercially available biaxial extruders, "PCM" manufactured by IKEGAI CORP., "KTX" manufactured by Kobe Steel, Ltd., "TEX" manufactured by The Japan Steel Works, Ltd., "TEM" manufactured by Toshiba Machine Co., Ltd, and "ZSK" manufactured by Warner can be given.

The L/D ratio, the ratio of the effective screw length (L) to the outer diameter (D), of the continuous kneader is preferably 5 or more, and more preferably 10 or more. As examples of commercially available continuous kneaders, "MIXTRON KTX-LCM-NCM" manufactured by Kobe Steel, Ltd. and "C1M-CMP" manufactured by The Japan Steel Works, Ltd. can be given.

The temperature during the dynamic heat treatment is preferably 120 to 350°C, and more preferably 150 to 290°C. The treating time is preferably from 20 seconds to 320 minutes, and more preferably from 30 seconds to 25 minutes. The loaded shearing stress, in terms of a shear rate, is preferably from 10/sec to 20000/sec, and more preferably from 100/sec to 10000/sec.

3. Foam product

One embodiment of the foam product of the present invention is described below. The foam product of the embodiment is obtained by foaming any one of the above-mentioned thermoplastic elastomer compositions. The foam product of the embodiment, therefore, has a high frequency of closed cell formation, and high uniformity in the shape

of foam cells. The foam product also has excellent rubber elasticity, pliability, and surface appearance.

The foam product of the embodiment is obtained by foaming the thermoplastic elastomer composition using an inert gas or a chemical foaming agent as mentioned later. The foam product obtained by using an inert gas contains less foaming agent residues than the foam product obtained by using a chemical foaming agent, imparts no odor, is easily recycled, and provides an excellent cushioning feel.

The average diameter of the cells (average cell diameter) contained in the foam product of the embodiment is preferably 1 to 200 μm, and more preferably 3 to 150 μm. The cushioning feel tends to decrease outside of these ranges. The average cell diameter is determined by a magnified photograph of the cross-section of the foam product.

The foam product of the embodiment has with a high frequency of closed cell formation, high uniformity in the shape of foam cells, and excellent rubber elasticity, excellent pliability, and superior external appearance. Therefore, the foam product of the embodiment is suitable for use in automobile interior parts such as an instrument panel and a glove box, automobile exterior parts such as a weather strip, electronic parts, vibration insulator materials of electric appliances, other industrial parts, building materials, sporting goods, and the like.

4. Process for producing foam product

(First production process of foam product)

Next, one embodiment of the first production process of foam product of the present invention is described. The first production process of foam product of the embodiment comprises injecting an inert gas into any one of the melted thermoplastic elastomer compositions described above and foaming the thermoplastic elastomer composition.

In the first production process of foam product of the embodiment, an inert gas is first injected into the melted thermoplastic elastomer composition. Any gas or a supercritical fluid is suitably used as this inert gas.

As the supercritical fluid, carbon dioxide or nitrogen in the state of a supercritical fluid is preferably used. For example, carbon dioxide can be brought into the supercritical state at a temperature of 31°C or more and a pressure of 7.3 MPa or more. Carbon dioxide is brought into the supercritical state at a comparatively low temperature and low pressure and exhibits a fast impregnation speed into the melted thermoplastic elastomer composition. In addition, carbon dioxide is suitable for foam production and can form minute cells because carbon dioxide can be mixed in the thermoplastic elastomer composition at a high concentration. As the gas, carbon dioxide, nitrogen, air, and the like are preferably used.

The first production process of foam product of the present invention is not particularly limited to the extent that the thermoplastic elastomer composition can be foamed. Either a batch process or a continuous process can be used. As a specific production process, extrusion molding, injection molding, press molding, and the like can be given.

If a gas or a supercritical fluid is poured into the thermoplastic elastomer composition in a melted state and homogeneously mixed, the fluidity of the thermoplastic elastomer composition increases due to the decrease of apparent viscosity. Furthermore, if the thermoplastic elastomer composition is foamed using the gas or the supercritical fluid, the foam expansion rate can be increased. In addition, the average cell diameter of the resulting foam product can be easily controlled. Cushioning feel of the resulting foam product can also be easily controlled. Moreover, if a gas or a supercritical fluid is used, it is possible to decrease the average cell diameter of the resulting foam product.

In general, a gas increases the foam expansion rate with more difficulty than a supercritical fluid, provided that the gas can produce a foam product using an inexpensive facility.

(Second production process of foam product)

Next, one embodiment of the second production process of foam product of the present invention is described. The second production process of foam product of the embodiment comprises providing a chemical-foaming-agent-containing raw material comprising 0.01 to 20 parts by mass of a chemical foaming agent and 100 parts by mass of any one of the above-described thermoplastic elastomer compositions and foaming the chemical-foaming-agent-containing raw materials.

In the second production process for a foam product of the embodiment, a chemical foaming agent is first added to the thermoplastic elastomer composition to obtain a chemical-foaming-agent-containing raw material. Any chemical foaming agent which is generally used in foam molding of a resin material can be used without particular limitation. A thermal decomposition foaming agent, a volatilization foaming agent, a hollow particle-type foaming agent, and the like can be appropriately selected according to the form molding method used. These chemical foaming agents may be used individually or in combination of two or more. As specific examples of commercially available products, "Vinyhole AC#3" (manufactured by Eiwa Chemical Ind.), "Polystyrene EE205" (manufactured by Eiwa Chemical Ind.), and "EXPANCEL-092(DU)-120" (manufactured by Expancel Co.) can be given.

The amount of the chemical foaming agent added is preferably 0.01 to 20 parts by mass, more preferably 0.1 to 20 parts by mass, and particularly preferably 0.1 to 15 parts by mass for 100 parts by mass of the thermoplastic

elastomer composition. An amount of the chemical foaming agent less than 0.01 parts by mass for 100 parts by mass of the thermoplastic elastomer composition is too small to obtain a foam product at a sufficient foam expansion rate. On the other hand, an amount of the chemical foaming agent more than 20 parts by mass for 100 parts by mass of the thermoplastic elastomer composition is undesirable because of production of a foam product with an impaired surface appearance.

Next, the resulting chemical-foaming-agent-containing raw material is foamed. Although there are no specific limitations to the forming method, foaming methods such as extrusion foaming, injection foaming, and the like can be suitably used. The foam product of the embodiment can be obtained in this manner.

Examples

The present invention is described below in detail by way of examples. Note that the present invention is not limited to the following examples. In the examples, "part(s)" means "part(s) by mass" and "%" means "% by mass" unless otherwise indicated. Methods for measuring and evaluating various properties are as follows.

[Evaluation of various characteristics] : Melt flow rate (MFR) and melt tension were measured using a thermoplastic elastomer composition in the form of pellets. In addition, test specimens, each having dimensions of 120 mm × 120 mm × 2 mm, were prepared from the thermoplastic elastomer compositions using an injection molding machine ("N-100" manufactured by The Japan Steel Works, Ltd.) to measure hardness (Duro A), tensile stress, tensile breaking strength, tensile breaking elongation, and compression set.

[Hardness (Duro A)]: was measured according to JIS K6253 and used as an index of pliability.

[Hardness (Duro D)]: was measured according to JIS K6253 and used as an index of pliability.

[Tensile stress, tensile breaking strength, and tensile breaking elongation]: were measured in accordance with JIS K6251.

[Melt flow rate (MFR)]: was measured according to JIS K7210 at 230°C under a load of 98 N to be used as an index of fluidity.

[Compression set]: was measured according to JIS K6262 at 70°C for 22 hours to be used as an index of rubber elasticity.

[Melt tension]: was measured using the melt tension tester Type-II (manufactured by Toyo Seiki Seisaku-Sho, Ltd.) under the following conditions.

Measurement temperature: 23°C
Orifice diameter: 2 mmφ
Extrusion rate: 10.0 mm/min
Pulling rate: 2.0 m/min

[Foam expansion rate]: The specific gravities before and after foaming of the thermoplastic elastomer composition were measured to calculate the foam expansion rate according to the following formula (1).

$$\text{Foam expansion rate} = \text{specific gravity before foaming/Specific gravity after foaming} \qquad (1)$$

[Foamability]: The foam expansion rate was calculated to evaluate the foamability according to the following criteria.

Good: Foam expansion rate is 5 or more
Fair: Foam expansion rate is 1.5 or more, but less than 5
Bad: Foam expansion rate is less than 1.5

[Foam product surface appearance] was evaluated by naked eye observation.

[Foam cell conditions]: A magnified (x 100) photograph was taken using a magnifying glass to observe the foam cell conditions.

[Thermoplastic elastomer composition raw material]: The following raw materials (1) to (12) were used for producing the thermoplastic elastomer compositions of Examples and Comparative Examples.

(1) Butadiene rubber: Mooney viscosity ($ML_{1+4}$, 100°C) = 39, 1,4-cis bond content = 97.0%, 1,2-vinyl bond content = 1.2%, Mw/Mn = 2.8

(2) Ethylene/propylene/5-ethylidene-2-norbornene ternary copolymer (EPDM): ethylene content = 66%, propylene content = 29.5%, 5-ethylidene-2-norbornene content = 4.5%, intrinsic viscosity (in decalin at 135°C) = 4.7 dl/g A mineral oil softener ("Diana process oil PW-90" manufactured by Idemitsu Kosan Co., Ltd.) was added to a polymer solution of the ternary copolymer rubber, and the solvent was removed to obtain an oil extended rubber used in Examples. The amount of the mineral oil softener (oil extender rate) added was 100 parts per 100 parts of the ternary copolymer rubber.

(3) Thermoplastic resin 1: crystalline polypropylene, "NEWSTREN SH9000" manufactured by Japan Polypropylene Corp., density = 0.90 g/$cm^3$, MFR (temperature: 230°C, load: 21.2 N) = 0.3 g/10 min, melt tension (temperature: 210°C, pulling rate 2.0 m/min) = 20.0 cN, melt tension (temperature 230°C) = 20.0 cN

(4) Thermoplastic resin composition 1: crystalline linear low density polyethylene content = 50%, hydrogenated diene copolymer content = 50%, density = 0.918 g/$cm^3$, MFR (temperature: 230°C, load: 21.2 N) = 2.5 g/10 min, compression set = 39%, melt tension (temperature: 210°C, pulling rate 2.0 m/min) = 8 cN

(5) Thermoplastic resin 2: crystalline polypropylene, "Novatech BC06C" manufactured by Japan Polypropylene Corp., density = 0.90 g/$cm^3$, MFR (temperature: 230°C, load: 21.2 N) = 60 g/10 min, melt tension (temperature: 210°C, pulling rate 2.0 m/min) = 0.5 cN

(6) Thermoplastic resin 3: crystalline polypropylene, "Novatech FA3EB" manufactured by Japan Polypropylene Corp., density = 0.90 g/$cm^3$, MFR (temperature: 230°C, load: 21.2 N) = 10.5 g/10 min, melt tension (temperature: 210°C, pulling rate 2.0 m/min) = 1.3 cN

(7) Thermoplastic resin 4: crystalline linear low density polyethylene, "Novatech UF423" manufactured by Japan Polypropylene Corp., density = 0.925 g/$cm^3$, MFR (temperature: 230°C, load: 21.2 N) = 0.8 g//10 min, melt tension (temperature: 210°C, pulling rate 2.0 m/min) = 2.9 cN

(8) Hydrogenated diene polymer: hydrogenated butadiene block copolymer, density = 0.88 g/$cm^3$, MFR (temperature: 230°C, load: 21.2 N) = 2.5 g/10 min, hydrogenation rate: 99%, weight average molecular weight: 300,000, block structure: (iii)-(iv)-(iii), vinyl bond content of polybutadiene block (iii) of the polymer before hydrogenation = 15%, vinyl bond content of polybutadiene block (iv) of the polymer before hydrogenation = 78%

(9) Paraffinic mineral oil: "Diana Process Oil PW-90" manufactured by Idemitsu Kosan Co., Ltd., pour point = -15°C, kinematic viscosity (40°C) = 95.54 cSt

(10) Aging preventive:

Pentaerythritoltetrakis[3-(3,5-di-tert-butyl-4-hydroxyphenyl)propionate] ("Irganox 1010" manufactured by Ciba Specialty Chemicals Co., Ltd.)

(11) Crosslinking agent: 5-dimethyl-2,5-di(t-butylperoxy)hexane, "Perhexa 25B-40" manufactured by NOF Corp.

(12) Crosslinking assistant: Divinylbenzene, manufactured by Nippon Steel Chemical Co., Ltd., purity: 81%

1. Thermoplastic elastomer composition

Example 1

18 parts of the above butadiene rubber, 20 parts of EPDM (rubber content: 10 parts, mineral oil softener: 10 parts), 57 parts of the thermoplastic resin 1 ("NEWSTREN SH9000"), 5 parts of the paraffinic mineral oil, and 0.1 part of the ageing preventive were mixed using a Henschel mixer. The mixture was fed to a pressure kneader (101, manufactured by Moriyama Co., Ltd.), which had been previously heated to 160°C, and kneaded at 40 rpm (shear rate: 200/sec) for 15 minutes until the thermoplastic resin was melted and the components were homogeneously dispersed to obtain a molten kneaded material. The resulting molten kneaded material was pelletized using a feeder ruder (manufactured by Moriyama Co., Ltd.). 0.5 parts of the crosslinking agent and 0.5 parts of the crosslinking assistant were fed to a Henschel mixer per 100.1 parts of the kneaded material, followed by mixing for 30 seconds. The mixture was extruded from a biaxial extruder (unidirectional complete mesh-type screw, the ratio of the screw flight length (L) to the screw diameter (D), L/D, = 33.5, "PCM45" manufactured by Ikegai, Ltd.) while dynamically treating with heat at 180°C for one minute and 30 seconds at a rotation rate of 300 rpm and a shear rate of 400/sec to obtain pellets of a thermoplastic elastomer composition (Example 1).

The resulting thermoplastic elastomer composition had a hardness (Duro A) of 100, hardness (Duro D) of 60, tensile stresses of 13.2 MPa (100% modulus) and 15.0 MPa (300% modulus), tensile breaking strength ($T_B$) of 22.0 MPa, tensile breaking elongation ($E_B$) of 490%, MFR of 6.9 g/10 min, melt tension of 12.5 cN, and compression set of 77%.

Example 2

18 parts of the above butadiene rubber, 20 parts of EPDM, 7 parts of the thermoplastic resin 2 ("Novatech BC06C"), 5 parts of the paraffinic mineral oil, and 0.1 part of the aging preventive were mixed using a Henschel mixer. The mixture was fed to a pressure kneader (101, manufactured by Moriyama Co., Ltd.) which had been previously heated to 160°C and kneaded at 40 rpm (shear rate: 200/sec) for 15 minutes until the thermoplastic resin was melted and the components were homogeneously dispersed to obtain a molten kneaded material. The resulting molten kneaded material was palletized using a feeder ruder (manufactured by Moriyama Co., Ltd.). 0.5 parts of the crosslinking agent and 0.5 parts of the crosslinking assistant were fed to a Henschel mixer per 50.1 parts of the kneaded material, followed by mixing for 30 seconds. The mixture was extruded from a biaxial extruder (unidirectional complete mesh-type screw, the ratio of the screw flight length (L) to the screw diameter (D), L/D, = 33.5, "PCM45" manufactured by Ikegai, Ltd.) while dynamically treating with heat at 180°C for one minute and 30 seconds at a rotation rate of 300 rpm and a shear rate of 400/sec to obtain pellets of the thermoplastic elastomer composition. 51.1 parts of the pellets and 50 parts of the thermoplastic resin 1 ("NEWSTREN SH9000") were mixed using a Henschel mixer. The mixture was extruded from a monoaxial extruder (the ratio of the screw flight length (L) to the screw diameter (D), L/D = 28, "FS40II" manufactured by Ikegai, Ltd.) at 220°C and 70 rpm to obtain pellets of a thermoplastic elastomer composition (Example 2). The results of measurement of various properties of the thermoplastic elastomer composition are shown in Table 1.

Example 3

Pellets of a thermoplastic elastomer composition (Example 3) were obtained in the same manner as in Example 2, except that the above thermoplastic resin composition 1 was used instead of the thermoplastic resin 1 ("NEWSTREN SH9000") of Example 2. The results of measurement of various properties of the thermoplastic elastomer composition are shown in Table 1.

Example 4

45 parts of EPDM, 5.5 parts of the thermoplastic resin 1 ("NEWSTREN SH9000"), 0.6 parts of the crosslinking agent, 0.5 parts of the crosslinking assistant, and 0.1 part of the aging preventive were fed to a Henschel mixer and mixed for 30 seconds. The mixture was extruded from a biaxial extruder (unidirectional complete mesh-type screw, the ratio of the screw flight length (L) to the screw diameter (D), L/D, = 33.5, "PCM45" manufactured by Ikegai, Ltd.) while dynamically treating with heat at 220°C for one minute and 30 seconds at a rotation rate of 400 rpm and a shear rate of

400/sec to obtain pellets of a thermoplastic elastomer composition (Example 4).

Example 5

45 parts of EPDM, 5 parts of the thermoplastic resin 3 ("Novatech FA3EB"), 0.6 parts of the crosslinking agent, 0.5 parts of the crosslinking assistant, and 0.1 part of the aging preventive were fed to a Henschel mixer and mixed for 30 seconds. The mixture was extruded from a biaxial extruder (unidirectional complete mesh-type screw, the ratio of the screw flight length (L) to the screw diameter (D), L/D, = 33.5, "PCM45" manufactured by Ikegai, Ltd.) while dynamically treating with heat at 220°C for one minute and 30 seconds at a rotation rate of 400 rpm and a shear rate of 400/sec to obtain pellets of the thermoplastic elastomer composition. 51.2 parts of the pellets and 50 parts of the thermoplastic resin 1 ("NEWSTREN SH9000") were mixed using a Henschel mixer. The mixture was extruded from a monoaxial extruder (the ratio of the screw flight length (L) to the screw diameter (D), L/D, = 28, "FS40II" manufactured by Ikegai, Ltd.) at 220°C and 70 rpm to obtain pellets of a thermoplastic elastomer composition (Example 5). The results of measurement of various properties of the thermoplastic elastomer composition are shown in Table 1.

Comparative Example 1

Pellets of a thermoplastic elastomer composition (Comparative Example 1) were obtained in the same manner as in Example 2, except that that the thermoplastic resin 4 ("Novatech UF423") was used instead of the thermoplastic resin 1 ("NEWSTREN SH9000") of Example 2. The results of measurement of various properties of the thermoplastic elastomer composition are shown in Table 1.

Comparative Example 2

Pellets of a thermoplastic elastomer composition (Comparative Example 2) were obtained in the same manner as in Example 5, except that the thermoplastic resin ("Novatech UF423") was used instead of the thermoplastic resin ("NEWSTREN SH9000") of Example 5. The results of measurement of various properties of the thermoplastic elastomer composition are shown in Table 1.

Comparative Example 3

Pellets of a thermoplastic elastomer composition (Comparative Example 3) were obtained by kneading 27 parts of EPDM, 30 parts of the thermoplastic resin ("NEWSTREN SH9000"), 30 parts of hydrogenated diene polymer, 13 parts of the thermoplastic resin ("Novatech UF423"), and 0.1 part of the aging preventive and palletizing the kneaded material. The results of measurement of various properties of the thermoplastic elastomer composition are shown in Table 1.

TABLE 1

| Thermoplastic elastomer composition | Example | | | | | Comparative Example | | |
|---|---|---|---|---|---|---|---|---|
| | 1 | 2 | 3 | 4 | 5 | 1 | 2 | 3 |
| Amount (part) | | | | | | | | |
| (A) Butadiene rubber | 18 | 18 | 18 | - | - | 18 | - | - |
| (A) EPDM (rubber content) | 10 | 10 | 10 | 22.5 | 22.5 | 10 | 22.5 | 13.5 |
| (B-1-a) Crystalline polypropylene (thermoplastic resin, melt tension = 20 cN) | 57 | 50 | - | 55 | 50 | - | - | 30 |
| (B-2-a) Crystalline linear low density polyethylene /hydrogenated diene copolymer composition) (thermoplastic resin composition, melt tension = 8.0 cN, compression set 39%) | - | - | 50 | - | - | - | - | - |

(continued)

| Thermoplastic elastomer composition | | Example | | | | | Comparative Example | | |
|---|---|---|---|---|---|---|---|---|---|
| | | 1 | 2 | 3 | 4 | 5 | 1 | 2 | 3 |
| (B-1-b) Crystalline polypropylene (thermoplastic resin, melt tension = 0.5 cN) | | - | 7 | 7 | - | - | 7 | - | - |
| (B-1-b) Crystalline polypropylene (thermoplastic resin, melt tension =1.3 cN) | | - | - | - | - | 5 | - | 5 | - |
| (B-1-b) Crystalline polypropylene (thermoplastic resin, melt tension = 2.9 cN) | | - | - | - | - | - | 50 | 50 | 13 |
| Hydrogenated diene polymer | | - | - | - | - | | - | - | 30 |
| Paraffinic mineral oil (including mineral oil of EPDM) | | 15 | 15 | 15 | 22.2 | 22.5 | 15 | 22.5 | 13.5 |
| (C) Crosslinking agent | | 0.5 | 0.5 | 0.5 | 0.6 | 0.5 | 0.5 | 0.6 | - |
| Crosslinking assistant | | 0.5 | 0.5 | 0.5 | 0.5 | 0.5 | 0.5 | 0.5 | - |
| Aging preventive | | 0.1 | 0.1 | 0.1 | 0.1 | 0.1 | 0.1 | 0.1 | 0.1 |
| Properties | | | | | | | | | |
| Hardness (Duro A) | | 100 | 100 | 82 | 100 | 100 | 100 | 94 | 90 |
| Hardness (Duro D) | | 60 | 58 | 37 | 55 | 53 | 45 | 40 | 39 |
| Tensile stress (MPa) | 100% Modulus | 13.2 | 11.7 | 3.6 | 11.2 | 10.2 | 4.1 | 3.6 | 5.0 |
| | 300% Modulus | 15.0 | 13.7 | 5.7 | 12.0 | 10.8 | 5.2 | 4.4 | 6.4 |
| Tensile breaking strength, (MPa) | | 22.0 | 20.8 | 10.5 | 20.7 | 19.3 | 7.5 | 7.0 | 10.7 |
| Tensile breaking elongation (%) | | 490 | 520 | 560 | 790 | 810 | 550 | 830 | 830 |
| MFR (g/10 min) | | 6.9 | 8.5 | 3.8 | 13.1 | 15.8 | 7.3 | 14.5 | 15.0 |
| Melt tension (cN) (210°C, pulling rate: 2.0 m/min) | | 12.5 | 8.6 | 8.2 | 11.5 | 8.2 | 4.5 | 4.1 | 4.0 |
| Compression set (%) | | 77 | 76 | 47 | 72 | 70 | 70 | 68 | 81 |

As shown in Figure 1, the thermoplastic elastomer compositions of Examples 1 to 5 exhibit a high melt tension of 8.0 cN or more. The compression set of the thermoplastic elastomer composition of Example 3 is very small. On the other hand, the thermoplastic elastomer compositions of Comparative Examples 1, 2, and 3 had a low melt tension and a large compression set.

2. Foam product
(1) Supercritical fluid foaming

[Method A]: 20 kg of a thermoplastic elastomer composition was discharged from the hopper of a tandem extrusion foam molding machine equipped with a supercritical fluid feeder which was operated under the following conditions to obtain a foam product by extrusion foaming.
First molding machine: the amount fed to the hopper: 20 kg, rotation: 70 rpm, heater temperature (temperature in cylinder): 240°C, cylinder internal pressure: 15 MPa Supercritical fluid: carbon dioxide, supercritical fluid supply amount: (supercritical fluid concentration): 3 mass%
Second molding machine: rotation: 10 rpm, heater temperature (temperature in cylinder): uppermost-stream side: 180°C, lowermost-stream side: 152°C, cylinder internal pressure: 8 MPa
Die: Die temperature: 152°C, pressure difference: 8 MPa

(2) Chemical foaming

[Method A]: A master batch was obtained by adding 1 part by mass of an wetting agent and a chemical foaming agent to 100 parts by mass of the thermoplastic elastomer composition, and stirring the mixture. The resulting master batch was put into a monoaxial extruder with a diameter of 40 mm (manufactured by Tanabe Plastics, Co., Ltd., L/D ratio = 28, T-die with a width of 20 mm and a height of 1.5 mm, foaming temperature: 220°C, rotation: 20 rpm, full flight screw) and foamed by extrusion foaming to obtain a foam product.
[Method B]: A master batch was obtained by adding 1 part by mass of an wetting agent and a chemical foaming agent to 100 parts by mass of the thermoplastic elastomer composition, and stirring the mixture. The resulting master batch was put into an injection molding machine ("IS-90B" manufactured by Toshiba Machine Co., Ltd., flat die with a length of 100 mm, a width of 3.5 to 6.5 mm, foaming temperature: 220°C) and foamed by injection molding to obtain a foam product.
[Method C]: A sheet of a thermoplastic elastomer composition containing a chemical foaming agent was obtained by adding a chemical foaming agent to 100 parts by mass of the thermoplastic elastomer composition, and foaming a sheet using an electric heat roll (manufactured by Kansai Roll Co., Ltd.) set at a temperature of 160°C. The resulting sheet was put into a 10 cm × 10 cm × 0.5 cm mold die and press-molded at 220°C for 10 minutes using an electric heat pressing machine to obtain a foam product.

Example 6

A foam product (Example 6) was obtained by foaming the thermoplastic elastomer composition of Example 1 according to the supercritical fluid foaming method (Method A). The foam expansion rate was 12, the foamability was "good", the foamed body surface appearance was "smooth", and the foam cell condition was "uniform".

(Examples 7 to 15 and Comparative Examples 4 to 6)

Foam products (Examples 7 to 15 and Comparative Examples 4 to 6) were obtained by foaming the thermoplastic elastomer compositions shown in Table 2 according to the forming method shown in Table 2. The evaluation results of the foamability, foamed body surface appearance, and foam cell conditions are shown in Table 2. Figure 1 shows an electron microscope photograph of the microstructure of the foam product of Example 7. The following commercially available products were used as chemical foaming agents (1) to (3) in Table 2.
Chemical foaming agent (1): thermal decomposition-type foaming agent, "Vinyhole AC#3" (manufactured by Eiwa Chemical Ind., thermal decomposition temperature: 208°C)
Chemical foaming agent (2): thermal decomposition-type foaming agent, "Polystyrene EE206" (manufactured by Eiwa Chemical Ind., thermal decomposition temperature: 200°C)
Chemical foaming agent (3): hollow particle-type foaming agent, "EXPANCEL-092(DU)-120" (manufactured by Expancel Co., the maximum thermal expansion temperature: 180°C)
TABLE 2

| Foam product | | Example | | | | | | | | | | Comparative Example | | |
|---|---|---|---|---|---|---|---|---|---|---|---|---|---|---|
| | | 6 | 7 | 8 | 9 | 10 | 11 | 12 | 13 | 14 | 15 | 4 | 5 | 6 |
| Thermoplastic Elastomer Composition | | Example | | | | | | | | | | Comparative Example | | |
| | | 1 | 2 | 3 | 4 | 5 | 2 | 2 | 2 | 2 | 2 | 1 | 2 | 3 |
| Supercritical fluid foaming | Method | A | A | A | A | A | - | - | - | - | - | A | A | A |
| Chemical forming | Method | - | - | - | - | - | A | A | A | B | C | - | - | - |
| | Foaming agent | - | - | - | - | - | (1) | (2) | (3) | (2) | (2) | - | - | - |
| Foamability | | Good | Good | Good | Good | Good | Fair | Fair | Fair | Fair | Fair | Bad | Bad | Fair |
| Foamed body surface appearance | | Smooth | Smooth | Smooth | Smooth | Smooth | Smooth | Smooth | Smooth | Smooth | Smooth | - | - | Roughened |
| Foam cell conditions | | Uniform | Uniform | Uniform | Uniform | Uniform | Uniform | Uniform | Uniform | Uniform | Uniform | - | - | Non-uniform |

As shown in Figure 1, the foam cells of the foam product of Example 7 have uniform size and shape. It is also clear that the thermoplastic elastomer composition uniformly foamed throughout the entire foam product at a high expansion rate.

As shown in Table 2, the foam products of Examples 6 to 15 have a high expansion rate, uniform foam cells, smooth surface, and excellent external appearance. On the other hand, the foam products of Comparative Examples 4 and 5 showed a low expansion rate. The foam product of Comparative Example 6 exhibited non-uniform foam cell conditions, a roughened surface, and a poor surface appearance.

INDUSTRIAL APPLICABILITY

The thermoplastic elastomer composition of the present invention excels in pliability, molding processability, and surface appearance, and can produce a foam product having with a high frequency of closed cell formation, high uniformity in the shape of foam cells, and excellent rubber elasticity, excellent pliability, and superior external appearance. Therefore, the foam product of the present invention obtained by foaming the thermoplastic elastomer composition of the present invention has rubber elasticity, pliability, and surface appearance, that is suitable for use in automobile interior parts such as an instrument panel and a glove box, automobile exterior parts such as a weather strip, electronic parts, vibration insulator materials of electric appliances, other industrial parts, building materials, sporting goods, and the like.

**Claims**

1. A thermoplastic elastomer composition obtained by dynamically heat treating a mixture of (A) at least one rubber selected from a group consisting of butadiene rubber, styrene-butadiene rubber, ethylene-α-olefin copolymer rubber, butyl rubber, isoprene rubber, acrylonitrile rubber, and chloroprene rubber and (B) an olefin resin as a thermoplastic resin (B-1) and/or an olefin resin composition as a thermoplastic resin composition (B-2) under heat in the presence of (C) a crosslinking agent; said composition having a melt tension of 5.0 cN or more at 210°C at a pulling rate of 2.0 m/min and a compression set of 80% or less when measured according to JIS K6262 at 70°C and 22 hours.

2. The thermoplastic elastomer composition according to claim 1, wherein the thermoplastic resin (B-1) has a melt tension of 3.0 cN or more at 210°C at a pulling rate of 2.0 m/min, and the thermoplastic resin composition (B-2) has a melt tension of 3.0 cN or more at 210°C at a pulling rate of 2.0 m/min.

3. The thermoplastic elastomer composition according to claim 1 or 2, wherein the thermoplastic resin composition (B-2) has a melt tension of 3.0 cN or more at 210°C at a pulling rate of 2.0 m/min and a compression set of 60% or less when measured according to JIS K6262 at 70°C and 22 hours.

4. The thermoplastic elastomer composition according to any one of claims 1 to 3, wherein the thermoplastic resin (B-1) is a crystalline α-olefin thermoplastic resin and/or an amorphous α-olefin thermoplastic resin composition.

5. The thermoplastic elastomer composition according to any one of claims 1 to 4, wherein the thermoplastic resin composition (B-2) comprises a crystalline α-olefin thermoplastic resin and/or an amorphous α-olefin thermoplastic resin composition and a hydrogenated diene polymer.

6. A process for producing a thermoplastic elastomer composition comprising providing a mixture of (A) at least one rubber selected from a group consisting of butadiene rubber, styrene-butadiene rubber, ethylene-α-olefin copolymer rubber, butyl rubber, isoprene rubber, acrylonitrile rubber, and chloroprene rubber and (B-1-b) a crystalline α-olefin thermoplastic resin and/or an amorphous α-olefin thermoplastic resin having a melt tension of less than 3.0 cN at 210°C at a pulling rate of 2.0 m/min dynamically heat treating the mixture under heat in the presence of (C) a crosslinking agent, and adding (B-1-a) a thermoplastic resin having a melt tension of 3.0 cN or more at 210°C at a pulling rate of 2.0 m/min and/or (B-2-a) a thermoplastic resin composition having a melt tension of 3.0 cN or more at 210°C at a pulling rate of 2.0 m/min.

7. A foam product obtained by foaming the thermoplastic elastomer composition according to any one of claims 1 to 5.

8. A process for producing a foam product comprising injecting an inert gas into the thermoplastic elastomer composition according to any one of claims 1 to 5 in a melted state and foaming the thermoplastic elastomer composition.

9. A process for producing a foam product comprising adding a chemical foaming agent in an amount of 0.01 to 20 parts by mass of a chemical foaming agent for 100 parts by mass of the thermoplastic elastomer composition according to any one of claims 1 to 5 to obtain a chemical-foaming-agent-containing raw material and foaming the chemical-foaming-agent-containing raw material.

**Patentansprüche**

1. Thermoplastische Elastomerzusammensetzung, die erhalten ist durch dynamisches Wärmebehandeln einer Mischung aus (A) zumindest einem Kautschuk ausgewählt aus einer Gruppe bestehend aus Butadienkautschuk, Styrol-Butadien-Kautschuk, Ethylen-α-Olefin-Copolymerkautschuk, Butylkautschuk, Isoprenkautschuk, Acrylonitrilkautschuk und Chloroprenkautschuk und (B) einem Olefinharz als ein thermoplastisches Harz (B-1) und/oder einer Olefinharzzusammensetzung als eine thermoplastische Harzzusammensetzung (B-2) unter Wärme in der Gegenwart (C) eines Vernetzungsmittels; wobei die Zusammensetzung eine Schmelzspannung von 5,0 cN oder mehr bei 210°C bei einer Zuggeschwindigkeit von 2,0 m/Min und einen Druckverformungsrest von 80% oder weniger aufweist, wenn gemäß JIS K6262 bei 70°C und 22 Stunden gemessen.

2. Thermoplastische Elastomerzusammensetzung nach Anspruch 1, wobei das thermoplastische Harz (B-1) eine Schmelzspannung von 3,0 cN oder mehr bei 210°C bei einer Ziehgeschwindigkeit von 2,0 m/Min aufweist und die thermoplastische Harzzusammensetzung (B-2) eine Schmelzspannung von 3,0 cN oder mehr bei 210°C bei einer Ziehgeschwindigkeit von 2,0 m/Min aufweist.

3. Thermoplastische Elastomerzusammensetzung nach Anspruch 1 oder 2, wobei die thermoplastische Harzzusammensetzung (B-2) eine Schmelzspannung von 3,0 cN oder mehr bei 210°C bei einer Ziehgeschwindigkeit von 2,0 m/Min und einen Druckverformungsrest von 60% oder weniger aufweist, wenn gemäß JIS K6262 bei 70°C und 22 Stunden gemessen.

4. Thermoplastische Elastomerzusammensetzung nach einem der Ansprüche 1 bis 3, wobei das thermoplastische Harz (B-1) ein kristallines α-Olefin thermoplastisches Harz und/oder eine amorphe α-Olefin thermoplastische Harzzusammensetzung ist.

5. Thermoplastische Elastomerzusammensetzung nach einem der Ansprüche 1 bis 4, wobei die thermoplastische Harzzusammesetzung (B-2) ein crystallines α-Olefin thermoplastisches Harz und/oder eine amorphe α-Olefin thermoplastische Harzzusammensetzung und ein hydriertes Dienpolymer umfasst.

6. Verfahren zum Herstellen einer thermoplastischen Elastomerzusammensetzung, umfassend das Bereitstellen einer Mischung aus (A) zumindest einem Kautschuk ausgewählt aus einer Gruppe bestehend aus Butadienkautschuk, Styrol-Butadien-Kautschuk, Ethylen-α-Olefin-Copolymerkautschuk, Butylkautschuk, Isoprenkautschuk, Acrylonitrilkautschuk und Chloroprenkautschuk und (B-1-b) einem kristallinen α-Olefin thermoplastischen Harz und/oder einem amorphen α-Olefin thermoplastischen Harz mit einer Schmelzspannung von weniger als 3,0 cN bei 210°C bei einer Ziehgeschwindigkeit von 2,0 m/Min, dynamisches Wärmebehandeln der Mischung unter Wärme in der Gegenwart (C) eines Vernetzungsmittels, und das Zugeben (B-1-a) eines thermoplastischen Harzes mit einer Schmelzspannung von 3,0 cN oder mehr bei 210°C bei einer Ziehgeschwindigkeit von 2,0 m/Min und/oder (B-2-a) einer thermoplastischen Harzzusammensetzung mit einer Schmelzspannung von 3,0 cN oder mehr bei 210°C bei einer Ziehgeschwindigkeit von 2,0 m/Min.

7. Schaumprodukt, das durch Aufschäumen der thermoplastischen Elastomerzusammensetzung nach einem der Ansprüche 1 bis 5 erhalten ist.

8. Verfahren zum Herstellen eines Schaumprodukts, umfassend das Einspritzen eines Inertgases in die thermoplastische Elastomerzusammensetzung nach einem der Ansprüche 1 bis 5 in einem geschmolzenen Zustand und das Aufschäumen der thermoplastischen Elastomerzusammensetzung.

9. Verfahren zum Herstellen eines Schaumprodukts, umfassend das Zugeben eines chemischen Schäumungsmittels in einer Menge von 0,01 bis 20 Gewichtsteilen eines chemischen Schäumungsmittels für 100 Gewichtsteile der thermoplastischen Elastomerzusammensetzung nach einem der Ansprüche 1 bis 5, um ein ein chemisches Schäumungsmittel enthaltendes Rohmaterial zu erhalten, und Aufschäumen des ein chemisches Schäumungsmittel enthaltenden Rohmaterials.

## Revendications

1. Composition d'élastomère thermoplastique obtenue par traitement par la chaleur de façon dynamique d'un mélange de (A) au moins un caoutchouc choisi dans un groupe constitué par un caoutchouc butadiène, un caoutchouc styrène-butadiène, un caoutchouc copolymère d'éthylène-$\alpha$-oléfine, un caoutchouc butyle, un caoutchouc isoprène, un caoutchouc acrylonitrile, et un caoutchouc chloroprène et (B) une résine oléfinique comme résine thermoplastique (B-1) et/ou une composition de résine oléfinique comme composition de résine thermoplastique (B-2) à chaud en présence de (C) un agent de réticulation ; ladite composition ayant une tension en fusion du 5,0 cN ou plus à 210°C à une vitesse de traction de 2,0 m/min et une rémanence à la compression de 80% ou moins lorsqu'elle est mesurée selon la norme JIS K6262 à 70°C et 22 heures.

2. Composition d'élastomère thermoplastique selon la revendication 1, dans laquelle la résine thermoplastique (B-1) a une tension en fusion de 3,0 cN ou plus à 210°C à une vitesse de traction de 2,0 m/min, et la composition de résine thermoplastique (B-2) a une tension en fusion de 3,0 cN ou plus à 210°C à une vitesse de traction de 2,0 m/min.

3. Composition d'élastomère thermoplastique selon la revendication 1 ou 2, dans laquelle la composition de résine thermoplastique (B-2) a une tension en fusion de 3,0 cN ou plus à 210°C à une vitesse de traction de 2,0 m/min et une rémanence à la compression de 60% ou moins lorsqu'elle est mesurée selon la norme JIS K6262 à 70°C et 22 heures.

4. Composition d'élastomère thermoplastique selon l'une quelconque des revendications 1 à 3, dans laquelle la résine thermoplastique (B-1) est une résine thermoplastique $\alpha$-oléfinique cristalline et/ou une composition de résine thermoplastique $\alpha$-oléfinique amorphe.

5. Composition d'élastomère thermoplastique selon l'une quelconque des revendications 1 à 4, dans laquelle la composition de résine thermoplastique (B-2) comprend une résine thermoplastique $\alpha$-oléfinique cristalline et/ou une composition de résine thermoplastique $\alpha$-oléfinique amorphe et un polymère diène hydrogéné.

6. Procédé de production d'une composition d'élastomère thermoplastique comprenant la fourniture d'un mélange de (A) au moins un caoutchouc choisi dans un groupe constitué par un caoutchouc butadiène, un caoutchouc styrène-butadiène, un caoutchouc copolymère d'éthylène-$\alpha$-oléfine, un caoutchouc butyle, un caoutchouc isoprène, un caoutchouc acrylonitrile, et un caoutchouc chloroprène et (B-1-b) une résine thermoplastique $\alpha$-oléfinique cristalline et/ou une résine thermoplastique $\alpha$-oléfinique amorphe ayant une tension en fusion de moins de 3,0 cN à 210°C à une vitesse de traction de 2,0 m/min, le traitement par la chaleur de façon dynamique du mélange à chaud en présence de (C) un agent de réticulation, et l'ajout (B-1-a) d'une résine thermoplastique ayant une tension en fusion de 3,0 cN ou plus à 210°C à une vitesse de traction de 2,0 m/min et/ou (B-2-a) une composition de résine thermoplastique ayant une tension en fusion de 3,0 cN ou plus à 210°C à une vitesse de traction de 2,0 m/min.

7. Produit de type mousse obtenu par moussage de la composition d'élastomère thermoplastique selon l'une quelconque des revendications 1 à 5.

8. Procédé de production d'un produit de type mousse comprenant l'injection d'un gaz inerte dans la composition d'élastomère thermoplastique selon l'une quelconque des revendications 1 à 5 dans un état fondu et le moussage de la composition d'élastomère thermoplastique.

9. Procédé de production d'un produit de type mousse comprenant l'ajout d'un agent chimique moussant dans une quantité de 0,01 à 20 parties en masse d'un agent chimique moussant pour 100 parties en masse de la composition élastomère thermoplastique selon l'une quelconque des revendications 1 à 5 pour obtenir une matière première contenant un agent chimique moussant et le moussage de la matière première contenant un agent chimique moussant.

FIG. 1

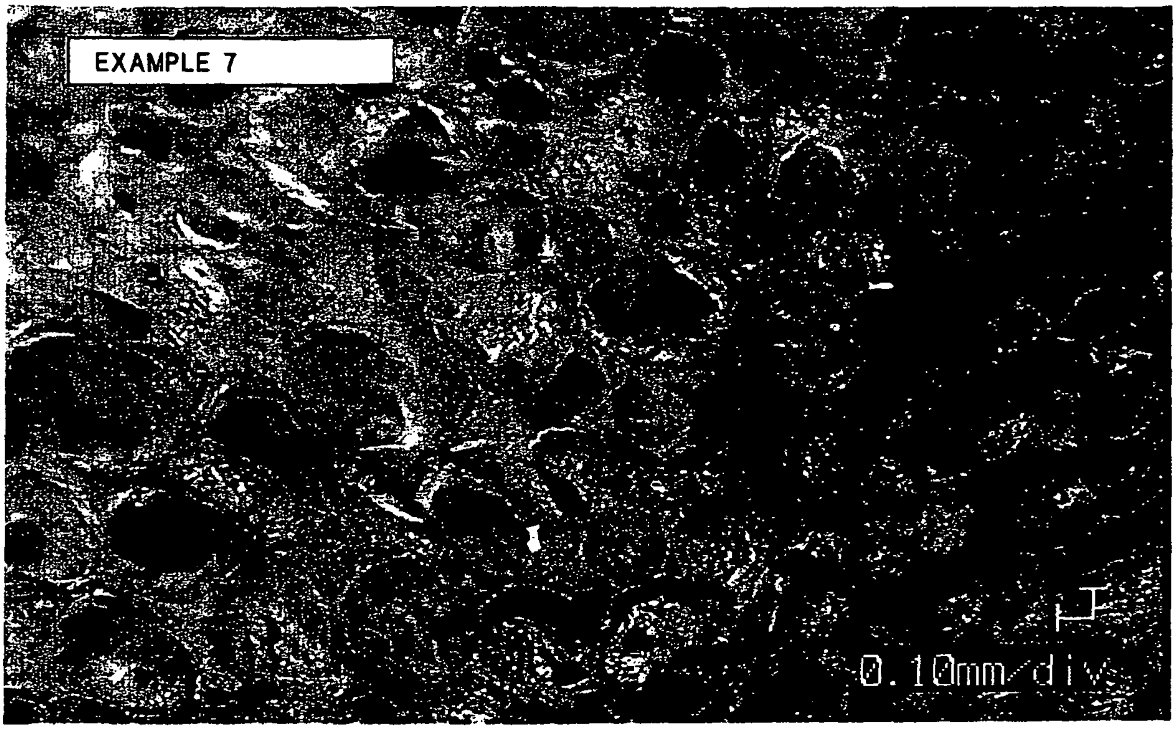

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6073222 A
- JP 2004250529 A
- US 20040249009 A1
- JP 11035633 A
- JP 7268132 A
- JP 1275605 A
- JP 5271326 A
- JP 5271325 A
- JP 5222115 A
- JP 11292924 A
- JP 2000037632 A
- JP 59133203 A
- JP 63005401 A
- JP 62218403 A
- JP 7090017 A
- JP 4319960 B
- JP 47040473 B


### Non-patent literature cited in the description


- *Fine Chemicals,* 1994, vol. 23 (9), 5
- *J. Am. Chem. Soc.,* 1993, vol. 115, 4971
- *J. Am. Chem. Soc.,* 1995, vol. 117, 6465